(19)

**Europäisches Patentamt**
**European Patent Office**
**Office européen des brevets**

(11) **EP 2 109 077 A2**

(12) **EUROPEAN PATENT APPLICATION**

(43) Date of publication:
**14.10.2009 Bulletin 2009/42**

(51) Int Cl.:
*G06Q 30/00* (2006.01)   *H04N 7/173* (2006.01)

(21) Application number: **09162043.5**

(22) Date of filing: **08.11.2007**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **10.11.2006 US 865200 P**
**25.12.2006 US 871834 P**

(62) Document number(s) of the earlier application(s) in accordance with Art. 76 EPC:
**07827335.6 / 2 095 636**

(71) Applicant: **Media Layers Ltd.**
**46733 Hertzelia Pituah (IL)**

(72) Inventors:
• **Man-El, Noam**
**42930 Ganot Hadar (IL)**
• **Klar, Nir**
**64686 Tel Aviv (IL)**
• **Sturm, Amir**
**40695 Moshav Mishmeret (IL)**
• **Yaari, Assaf**
**48056 Rosh Haayin (IL)**
• **Idan, Ofer**
**58834 Holon (IL)**

• **Cohen, Gilad**
**76620 Rehovot (IL)**
• **Krasner, Eitan**
**54424 Givat Shmuel (IL)**
• **Nitzan, Assaf**
**34980 Haifa (IL)**
• **Wiegenfeld, Dan**
**47321 Ramat Hasharon (IL)**
• **Dotan, Shay**
**42905 Udim (IL)**
• **Alon, Haim**
**43272 Raanana (IL)**
• **Lurie, Eli**
**60409 Or Yehuda (IL)**

(74) Representative: **Harrison Goddard Foote**
**Belgrave Hall**
**Belgrave Street**
**Leeds**
**LS2 8DD (GB)**

Remarks:
This application was filed on 05-06-2009 as a divisional application to the application mentioned under INID code 62.

(54) **Method and computer program product for providing advertisements to a mobile user device**

(57) A method for providing advertisements to a mobile user device, the method includes: receiving a user request to receive content; filtering advertisements to be sent to the user by applying multiple filtering rules; selecting a selected advertisement out of filtered advertisements; sending to the user the selected advertisement and the requested content; wherein the filtering and the selecting are responsive to a large number of parameters that comprise multiple user parameters, multiple content parameters, multiple system parameter and multiple advertisement parameters.

Figure 2

**Description**

FIELD OF THE INVENTION

The present invention relates to systems, methods and computer program products for providing advertisements to a mobile user device.

BACKGROUND OF THE INVENTION

Today's advertising trends represent a growing demand for targeted and personalized advertisements. These types of advertisements were found to be significantly more effective. There is a clear understanding within the market that Mobile, Internet and other Internet Protocol (IP) Networks (e.g. IMS, IPTV) and Broadcasting networks (e.g. DVB-H) are the most effective advertising channels to meet these trends. There is a unique opportunity within the mobile market to leverage the growth of media/content consumption and personalization capabilities.

One of the main challenges within the multimedia (e.g. images, audio, animation and more) & video advertising domain is the lack of advertising space that is embedded and combined within the normal data and content consumption by users. Moreover, as the multimedia & video content nature becomes more "real-time" oriented, the challenge is to create such advertising space in real time, within that content. The additional value is the higher value of the embedded advertisements created by the personalization process.

There is a need to provide efficient methods, systems and computer program products that can deliver targeted advertisements to mobile systems.

SUMMARY

A method for providing advertisements to a mobile user device, the method includes: receiving a user request to receive content; filtering advertisements to be sent to the user by applying multiple filtering rules; selecting a selected advertisement out of filtered advertisements; sending to the user the selected advertisement and the requested content; the filtering and the selecting are responsive to a large number of parameters that include multiple user parameters, multiple content parameters, multiple system parameter and multiple advertisement parameters.

Conveniently, the method includes filtering advertisement by applying advertisement frequency rules.

Conveniently, the method includes filtering advertisements by applying user filtering rules, advertisement filtering rules and advertisement campaign filtering rules.

Conveniently, the method includes filtering advertisements by applying advertisement management system filtering rules and advertisement rules.

Conveniently, the filtering is responsive to multiple parameters; the parameters include multiple user parameters; at least one advertisement campaign parameter; at least one advertisement parameter; at least one requested content parameter; and at least one parameter selected from a time of the user request and a location of the user when the user request was sent.

Conveniently, the filtering is responsive to multiple parameters; the parameters include multiple user parameters; multiple advertisement campaign parameters; multiple advertisement parameters; multiple requested content parameters; and at least one parameter selected from a time of the user request and a location of the user when the user request was sent.

Conveniently, the filtering is responsive to at least twenty parameters.

Conveniently, the filtering is responsive to at least fifty parameters. Conveniently, the filtering is responsive to at least one hundred parameters.

Conveniently, the method includes receiving a request to retrieve code; altering the requested code such as to include advertisement related code; sending the altered code to the end user device; when the user device executes the altered code an advertisement related operation is executed. The code can be a represented in various manners (such as but not limited to compiled code). It can include an application, a script and the like. Conveniently, the advertisement related code causes a personalized advertisement to be provided to the user.

Conveniently, the method includes altering the requested code to include a plug in code that once executed performs an advertisement related operation.

A computer program product including a computer usable medium including a computer readable program, the computer readable program when executed on a computer causes the computer to receive a user request to receive content; filter advertisements to be sent to the user by applying multiple filtering rules; select a selected advertisement out of filtered advertisements; send to the user the selected advertisement and the requested content; processor filters and selects in response to a large number of parameters that include multiple user parameters; multiple content parameters, multiple system parameter and multiple advertisement parameters.

Conveniently, the computer readable program when executed on a computer causes the computer to filter advertisement by applying advertisement frequency rules.

Conveniently, the computer readable program when executed on a computer causes the computer to filter advertisements by applying user filtering rules, advertisement filtering rules and advertisement campaign filtering rules.

Conveniently, the computer readable program when executed on a computer causes the computer to filter advertisements by applying advertisement management system filtering rules and advertisement rules.

Conveniently, the computer readable program when executed on a computer causes the computer to filter in response to multiple parameters; the parameters include multiple user parameters; at least one advertisement campaign parameter; at least one advertisement parameter; at least one requested content parameter; and at least one parameter selected from a time of the user request and a location of the user when the user request was sent.

Conveniently, the computer readable program when executed on a computer causes the computer to filter in response to multiple parameters; the parameters include multiple user parameters; multiple advertisement campaign parameters; multiple advertisement parameters; multiple requested content parameters; and at least one parameter selected from a time of the user request and a location of the user when the user request was sent.

Conveniently, the computer readable program when executed on a computer causes the computer to filter in response to at least twenty parameters.

Conveniently, the computer readable program when executed on a computer causes the computer to filter in response to at least fifty parameters.

Conveniently, the computer readable program when executed on a computer causes the computer to filter in response to at least one hundred parameters.

Conveniently, the computer readable program when executed on a computer causes the computer to receive a request to retrieve code; alter the requested code such as to include advertisement related code; and send the altered code to the end user device; when the user device executes the altered code an advertisement related operation is executed.

Conveniently, the advertisement related code causes a personalized advertisement to be provided to the user.

Conveniently, the computer readable program when executed on a computer causes the computer to alter the requested code to include a plug in code that once executed performs an advertisement related operation.

A system including a communication module for receiving a user request to receive content; a filter adapted to filter advertisements to be sent to the user by applying multiple filtering rules; a selection unit, adapted to select a selected advertisement out of filtered advertisements; and a communication module adapted to participate in a sending to a user device the selected advertisement and the requested content; the advertisement filter and the selection unit are responsive to a large number of parameters that include multiple user parameters, multiple content parameters, multiple system parameter and multiple advertisement parameters.

Conveniently, the filter is adapted to filter advertisement by applying advertisement frequency rules.

Conveniently, the filter is adapted to filter advertisements by applying user filtering rules, advertisement filtering rules and advertisement campaign filtering rules.

Conveniently, the filter is adapted to filter advertisements by applying advertisement management system filtering rules and advertisement rules.

Conveniently, the filter is adapted to filter advertisements in response to multiple parameters; the parameters include multiple user parameters; at least one advertisement campaign parameter; at least one advertisement parameter; at least one requested content parameter; and at least one parameter selected from a time of the user request and a location of the user when the user request was sent.

Conveniently, the filter is adapted to filter in response to multiple parameters; the parameters include multiple user parameters; multiple advertisement campaign parameters; multiple advertisement parameters; multiple requested content parameters; and at least one parameter selected from a time of the user request and a location of the user when the user request was sent.

Conveniently, the filter is adapted to filter in response to at least twenty parameters.

Conveniently, the filter is adapted to filter in response to at least fifty parameters.

Conveniently, the system is adapted to filter in response to at least one hundred parameters.

Conveniently, the system is adapted to receive a request to retrieve code; and the system is adapted to alter the requested code such as to include advertisement related code; the communication module sends the altered code to the end user device; when the user device executes the altered code an advertisement related operation is executed.

Conveniently, the advertisement related code causes a personalized advertisement to be provided to the user.

Conveniently, the system is adapted to alter the requested code to include a plug in code that once executed performs an advertisement related operation.

A method for advertisement resource management, including: receiving a request to initiate an advertisement campaign; evaluating the advertisement campaign in view of at least three different advertisement campaign parameters selected from a group consisting of : advertisement type, service type, advertisement insertion type, content category,

3

contextual parameters that indicate the context in which the user is expected to request content, timing parameters, number of impressions per advertisement campaign; user parameters of users that belong to a target population, and responding to the request to initiate the advertisement campaign in response to the evaluation.

Conveniently, the method includes evaluating the advertisement campaign in view of at least five different advertisement campaign parameters selected from a group consisting of: advertisement type, service type, advertisement insertion type, content category, contextual parameters that indicate the context in which the user is expected to request content, timing parameters, number of impressions per advertisement campaign; user parameters of users that belong to a target population.

Conveniently, the responding includes suggesting an amendment of the advertisement campaign.

Conveniently, the method includes monitoring a transmission of impressions during an advertisement campaign.

Conveniently, the method includes promoting transmissions of impressions of an advertisement campaign that is characterized by a low impression transmission factor.

Conveniently, the evaluating is responsive to a type of advertisement campaign.

A computer program product including a computer usable medium including a computer readable program, the computer readable program when executed on a computer causes the computer to receive a request to initiate an advertisement campaign; evaluate the advertisement campaign in view of at least three different advertisement campaign parameters selected from a group consisting of : advertisement type, service type, advertisement insertion type, content category, contextual parameters that indicate the context in which the user is expected to request content, timing parameters, number of impressions per advertisement campaign; user parameters of users that belong to a target population, and respond to the request to initiate the advertisement campaign in response to the evaluation.

Conveniently, the computer readable program when executed on a computer causes the computer to evaluate the advertisement campaign in view of at least five different advertisement campaign parameters selected from a group consisting of: advertisement type, service type, advertisement insertion type, content category, contextual parameters that indicate the context in which the user is expected to request content, timing parameters, number of impressions per advertisement campaign; user parameters of users that belong to a target population.

Conveniently, the computer readable program when executed on a computer causes the computer to suggest an amendment of the advertisement campaign.

Conveniently, the computer readable program when executed on a computer causes the computer to monitor transmissions of impressions during an advertisement campaign.

Conveniently, the computer readable program when executed on a computer causes the computer to promote transmissions of impressions of an advertisement campaign that is characterized by a low impression transmission factor.

Conveniently, the computer readable program when executed on a computer causes the computer to evaluate in response to a type of an advertisement campaign.

A system including: a communication module for receiving a request to initiate an advertisement campaign; an evaluator for evaluating the advertisement campaign in view of at least three different advertisement campaign parameters selected from a group consisting of : advertisement type, service type, advertisement insertion type, content category, contextual parameters that indicate the context in which the user is expected to request content, timing parameters, number of impressions per advertisement campaign; user parameters of users that belong to a target population, and a controller adapted to respond to the request to initiate the advertisement campaign in response to the evaluation.

Conveniently, the evaluator is adapted to evaluate the advertisement campaign in view of at least five different advertisement campaign parameters selected from a group consisting of : advertisement type, service type, advertisement insertion type, content category, contextual parameters that indicate the context in which the user is expected to request content, timing parameters, number of impressions per advertisement campaign; and user parameters of users that belong to a target population.

Conveniently, the controller is adapted to suggest an amendment of the advertisement campaign.

Conveniently, the system includes an impression monitor adapted to monitor transmissions of impressions during an advertisement campaign.

Conveniently, the system is adapted to promote transmissions of impressions of an advertisement campaign that is characterized by a low impression transmission factor.

Conveniently, the evaluator evaluates in response to a type of an advertisement campaign.

A method for providing advertisements to a mobile user device, the method including: receiving a user request to receive content; filtering advertisements to be sent to the user by applying multiple filtering rules; selecting a selected advertisement out of filtered advertisements; select a selected advertisement representation; selectively processing the selected advertisement; sending to the user the selected advertisement and the requested content; the filtering and the selecting are responsive to a large number of parameters.

Conveniently, the method includes determining an advertisement area in which an advertisement should be displayed and sending to the user the selected advertisement such as to appear only within the advertisement area.

Conveniently, the method includes generating hybrid images that include selected advertisement information and requested content information.

Conveniently, the method includes generating hybrid images while minimizing encoding and decoding steps.

Conveniently, the method includes generating hybrid images while minimizing size changes between content images and corresponding hybrid images.

Conveniently, the method includes generating hybrid images that include selected advertisement overlaid over requested content while limiting an encoding to an area the corresponds to an overlay image and to a small interfacing area that includes motion vectors that point to the overlay area, if such small interfacing area exists.

Conveniently, the method includes inserting advertisement into requested content while minimizing encoding and decoding steps.

Conveniently, the method includes inserting advertisement into requested content while reducing audio level changes between advertisement audio and content audio.

Conveniently, the method includes inserting advertisement into requested content while determining a gain factor of an advertisement audio in response to a gain factor of content audio of a content portion that is proximate to the advertisement.

Conveniently, the method includes inserting advertisement into requested content while setting the gain factor of advertisement audio to be substantially equal to a gain factor of content audio of a content portion that is proximate to the advertisement.

A computer program product including a computer usable medium including a computer readable program, the computer readable program when executed on a computer causes the computer to receive a user request to receive content; filter advertisements to be sent to the user by applying multiple filtering rules; select a selected advertisement out of filtered advertisements; select a selected advertisement representation; selectively process the selected advertisement; send to the user the selected advertisement and the requested content; processor filters and selects in response to a large number of parameters that include multiple user parameters; multiple system parameter and multiple advertisement parameters.

Conveniently, the computer readable program when executed on a computer causes the computer to determine an advertisement area in which an advertisement should be displayed and sending to the user the selected advertisement such as to appear only within the advertisement area.

Conveniently, the computer readable program when executed on a computer causes the computer to generate hybrid images that include selected advertisement information and requested content information.

Conveniently, the computer readable program when executed on a computer causes the computer to insert advertisement into requested content while minimizing encoding and decoding steps.

Conveniently, the computer readable program when executed on a computer causes the computer to insert advertisement into requested content while reducing audio level changes between advertisement audio and content audio.

Conveniently, the computer readable program when executed on a computer causes the computer to insert advertisement into requested content while determining a gain factor of an advertisement audio in response to a gain factor of content audio of a content portion that is proximate to the advertisement.

Conveniently, the computer readable program when executed on a computer causes the computer to insert advertisement into requested content while setting the gain factor of advertisement audio to be substantially equal to a gain factor of content audio of a content portion that is proximate to the advertisement.

A system including a communication module for receiving a user request to receive content; a filter adapted to filter advertisements to be sent to the user by applying multiple filtering rules; a selection unit, adapted to select a selected advertisement out of filtered advertisements; a processor, adapted to select a selected advertisement representation and to selectively process the selected advertisement; and a communication module adapted to participate in a sending to a user device the selected advertisement and the requested content; the advertisement filter and the selection unit are responsive to a large number of parameters that include multiple user parameters; multiple system parameter and multiple advertisement parameters.

Conveniently, the processor is adapted to determine an advertisement area in which an advertisement should be displayed and sending to the user the selected advertisement such as to appear only within the advertisement area.

Conveniently, the processor is adapted to generate hybrid images that include selected advertisement information and requested content information.

Conveniently, the processor is adapted to generate hybrid images while minimizing encoding and decoding steps.

Conveniently, the processor is adapted to generate hybrid images while minimizing size changes between content images and corresponding hybrid images.

Conveniently, the processor is adapted to generate hybrid images that include selected advertisement overlaid over requested content while limiting an encoding to an area the corresponds to an overlay image and to a small interfacing area that includes motion vectors that point to the overlay area, if such small interfacing area exists.

Conveniently, the processor is adapted to insert advertisement into requested content while minimizing encoding and decoding steps.

Conveniently, the processor is adapted to insert advertisement into requested content while reducing audio level changes between advertisement audio and content audio.

Conveniently, the processor is adapted to insert advertisement into requested content while determining a gain factor of an advertisement audio in response to a gain factor of content audio of a content portion that is proximate to the advertisement.

Conveniently, the processor is adapted to insert advertisement into requested content while setting the gain factor of advertisement audio to be substantially equal to a gain factor of content audio of a content portion that is proximate to the advertisement.

Conveniently, the system is adapted to manage advertisement campaign resources.

Conveniently, the system is adapted to select in response to utilization of advertisement campaign resources.

A method for providing advertisements to a mobile user device, the method including: receiving a user request to receive content; selecting in real time a selected advertisement to sent to the user device by applying a user prediction model that predicts a user response to an advertisement that is sent to the mobile user device; and sending to the user device the selected advertisement in addition to the requested content.

Conveniently, the method includes updating a user prediction model based upon statistical analysis of large number of parameters that includes user parameters, content parameters and advertisement parameters.

Conveniently, the method includes updating a user prediction model by applying machine learning algorithms.

Conveniently, the method includes repetitively generating a new version of a user prediction model; comparing the new version of the user prediction model to an older version of the user prediction model and determining whether to replace the older version of the user prediction model by the new version of the user prediction model based upon the comparison.

Conveniently, the method includes comparing between a reliability and quality of each version.

Conveniently, the selecting is also responsive to predefined selection rules.

Conveniently, the method includes applying the user prediction model on a very large number of characteristics.

A computer program product including a computer usable medium including a computer readable program, the computer readable program when executed on a computer causes the computer to: receive a user request to receive content; select in real time a selected advertisement to sent to the user device by applying a user prediction model that predicts a user response to an advertisement that is sent to the mobile user device; and send to the user device the selected advertisement in addition to the requested content.

Conveniently, the computer readable program when executed on a computer causes the computer to update a user prediction model based upon statistical analysis of large number of parameters that includes user parameters, content parameters and advertisement parameters.

Conveniently, the computer readable program when executed on a computer causes the computer to update a user prediction model by applying machine learning algorithms.

Conveniently, the computer readable program when executed on a computer causes the computer to repetitively generate a new version of a user prediction model; compare the new version of the user prediction model to an older version of the user prediction model and determine whether to replace the older version of the user prediction model by the new version of the user prediction model based upon the comparison.

Conveniently, the computer readable program when executed on a computer causes the computer to compare between a reliability and quality of each version.

Conveniently, the computer readable program when executed on a computer causes the computer to select an advertisement in response to predefined selection rules.

Conveniently, the computer readable program when executed on a computer causes the computer to apply the user prediction model on a very large number of characteristics.

A system that includes: a communication module adapted to receive a user request to receive content; and a selection unit adapted to select in real time a selected advertisement to be sent to the user device by applying a user prediction model that predicts a user response to an advertisement that is sent to the mobile user device; the selected advertisement is sent to the user device in addition to the requested content.

Conveniently, the system includes a user prediction model unit adapted to update a user prediction model based upon statistical analysis of large number of parameters that includes user parameters, content parameters and advertisement parameters.

Conveniently, the selection unit that updates a user prediction model by applying machine learning algorithms.

Conveniently, the selection unit repetitively generates a new version of a user prediction model; compare the new version of the user prediction model to an older version of the user prediction model and determine whether to replace the older version of the user prediction model by the new version of the user prediction model based upon the comparison.

Conveniently, the user prediction model unit compares between a reliability and quality of each version.

Conveniently, the selection unit selects an advertisement in response to predefined selection rules.

A method for providing advertisements to a mobile user device, the method including: analyzing multiple images of a content that is expected to be sent to a mobile user device find an advertisement area; the advertisement area is smaller than an image; and adjusting an advertisement that is expected to be sent to the mobile user device such as to fit to the advertisement area.

Conveniently, the method includes sending to the user device an adjusted advertisement to be displayed within the advertisement area.

Conveniently, the analyzing includes classifying pixels of each image out of the multiple images to low motion pixels and high motion pixels; the advertisement area includes a majority of low motion pixels.

Conveniently, the method includes detecting a shot based upon a ratio between a number of low motion pixels and a number of high motion pixels within an image out of the multiple images.

Conveniently, the analyzing includes classifying pixels of each image out of the multiple images based upon direct current components of a partially decoded image.

Conveniently, the method includes finding the advertisement area in response to a motion level of pixels and to a distance of pixels from edges of an image.

Conveniently, the method includes classifying pixels of each image out of the multiple images in response to a dynamically calculated threshold.

Conveniently, the analyzing is executed in real time and in response to a request of a user to receive content; and the analyzing is performed on a sequence of real time images that does not exceed a predefined length.

Conveniently, the analyzing includes generating a histogram that represents a distribution of pixels and their motion.

Conveniently, further including updating background model.

A system for providing advertisements to a mobile user device, the system includes: a storage unit adapted to store multiple images of content that is expected to be sent to a mobile user device; and a processor that is adapted to: analyze the multiple images to find an advertisement area; the advertisement area is smaller than an image; and adjust an advertisement that is expected to be sent to the mobile user device such as to fit to the advertisement area.

Conveniently, the processor is adapted to send to the user device an adjusted advertisement to be displayed within the advertisement area.

Conveniently, the processor is adapted to classify pixels of each image out of the multiple images to low motion pixels and high motion pixels; the advertisement area includes a majority of low motion pixels.

Conveniently, the processor is adapted to detect a shot based upon a ratio between a number of low motion pixels and a number of high motion pixels within an image out of the multiple images.

Conveniently, the processor is adapted to classify pixels of each image out of the multiple images based upon direct current components of a partially decoded image.

Conveniently, the processor is adapted to find the advertisement area in response to a motion level of pixels and to a distance of pixels from edges of an image.

Conveniently, the processor is adapted to classify pixels of each image out of the multiple images in response to a dynamically calculated threshold.

Conveniently, the processor is adapted to analyze the multiple images in real time in response to a request of a user to receive content; and the analysis is performed on a sequence of real time images that does not exceed a predefined length.

Conveniently, the processor is adapted to generate a histogram that represents a distribution of pixels and their motion.

Conveniently, the processor is adapted to update background model.

A computer program product including a computer usable medium including a computer readable program, the computer readable program when executed on a computer causes the computer to analyze multiple images of a content that is expected to be sent to a mobile user device find an advertisement area; the advertisement area is smaller than an image; and adjust an advertisement that is expected to be sent to the mobile user device such as to fit to the advertisement area.

Conveniently, the computer readable program when executed on a computer causes the computer to send the user device an adjusted advertisement to be displayed within the advertisement area.

Conveniently, the computer readable program when executed on a computer causes the computer to classify pixels of each image out of the multiple images to low motion pixels and high motion pixels; the advertisement area includes a majority of low motion pixels.

Conveniently, the computer readable program when executed on a computer causes the computer to detect a shot based upon a ratio between a number of low motion pixels and a number of high motion pixels within an image out of the multiple images.

Conveniently, the computer readable program when executed on a computer causes the computer to classify pixels of each image out of the multiple images based upon direct current components of a partially decoded image.

Conveniently, the computer readable program when executed on a computer causes the computer to find the advertisement area in response to a motion level of pixels and to a distance of pixels from edges of an image.

Conveniently, the computer readable program when executed on a computer causes the computer to classify pixels of each image out of the multiple images in response to a dynamically calculated threshold.

Conveniently, the computer readable program when executed on a computer causes the computer to analyze the multiple images in real time and in response to a request of a user to receive content; and the analysis is performed on a sequence of real time images that does not exceed a predefined length.

Conveniently, the computer readable program when executed on a computer causes the computer to generate a histogram that represents a distribution of pixels and their motion.

Conveniently, the computer readable program when executed on a computer causes the computer to update a background model.

A method for advertisement insertion, the method including: detecting a commercial break by correlating between at least two detection events selected from a group consisting of: detection of an increase of an average audio level; detection of logo changes; detection of predefined images that are indicative of an advertisement break; detection of a shot change; and inserting an advertisement to be sent to a mobile end user device.

Conveniently, the detecting includes correlating between at least three detection events selected from a group consisting of: detection of an increase of an average audio level; detection of logo changes; detection of predefined images that are indicative of an advertisement break; detection of a shot change.

Conveniently, the detecting includes correlating between detection of an increase of an average audio level; detection of logo changes; detection of predefined images that are indicative of an advertisement break; and detection of a shot change.

A computer program product including a computer usable medium including a computer readable program, the computer readable program when executed on a computer causes the computer to detect a commercial break by correlating between at least two detection events selected from a group consisting of: detection of an increase of an average audio level; detection of logo changes; detection of predefined images that are indicative of an advertisement break; detection of a shot change; and insert an advertisement to be sent to a mobile end user device.

Conveniently, the computer readable program when executed on a computer causes the computer to correlate between at least three detection events selected from a group consisting of: detection of an increase of an average audio level; detection of logo changes; detection of predefined images that are indicative of an advertisement break; detection of a shot change.

Conveniently, the computer readable program when executed on a computer causes the computer to correlate between a detection of an increase of an average audio level; detection of logo changes; a detection of predefined images that are indicative of an advertisement break; and a detection of a shot change.

A system for advertisement insertion, the system includes a detector that detects a commercial break by correlating between at least two detection events selected from a group consisting of: detection of an increase of an average audio level; detection of logo changes; detection of predefined images that are indicative of an advertisement break; detection of a shot change; and insert an advertisement to be sent to a mobile end user device.

Conveniently, the detector detects a commercial break by correlating between at least two detection events selected from a group consisting of: detection of an increase of an average audio level; detection of logo changes; detection of predefined images that are indicative of an advertisement break; detection of a shot change; and insert an advertisement to be sent to a mobile end user device.

Conveniently, the detector detects a commercial break by correlating between a detection of an increase of an average audio level; detection of logo changes; a detection of predefined images that are indicative of an advertisement break; and a detection of a shot change.

BRIEF DESCRIPTION OF THE DRAWINGS

The present invention will be understood and appreciated more fully from the following detailed description taken in conjunction with the drawings in which:

Figure 1 illustrates a system for according to an embodiment of the invention;

Figure 2 illustrates a system for according to an embodiment of the invention;

Figure 3 is a flow chart of a method according to an embodiment of the invention;

Figure 4 illustrates a method for providing advertisements to a mobile user device, according to various embodiments of the invention;

Figure 5 illustrates a method for adjusting advertisements to be provided to a mobile user device, according to an embodiment of the invention;

Figure 6 is a histogram according to an embodiment of the invention;

Figures 7,8, 9a and 9b illustrate a content metadata management screen, a user metadata management summary screen, a user metadata management screen and a Video advertisement analysis screen, according to various embodiments of the invention;

Figure 10a illustrates an advertisement insertion according to an embodiment of the invention;

Figure 10b illustrates an advertisement insertion according to an embodiment of the invention;

Figure 11 illustrates an advertisement insertion according to an embodiment of the invention;

Figure 12 illustrates an overlay without encoding according to an embodiment of the invention;

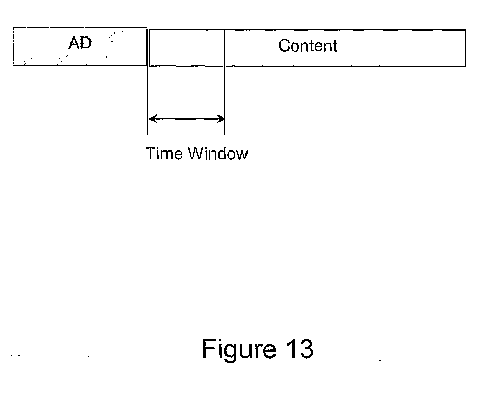

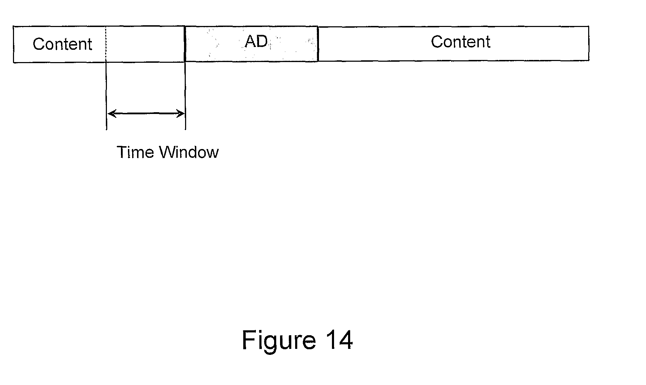

Figure 13 and 14 illustrates audio processing according to various embodiments of the invention;

Figure 15 illustrates a click to call scenario according to an embodiment of the invention; and

Figure 16 illustrates a video feedback scenario according to an embodiment of the invention.

DETAILED DESCRIPTION OF THE DRAWINGS

The following description refers to a system that can send information over a cellular network to mobile phones. It is noted that other user devices can receive advertisements over various networks including but not limited to the Internet. For example, the user device can be a mobile device, a stationary device, a desktop computer, a laptop computer, a media player, a personal digital assistant. Yet for another example the network can be Internet Protocol (IP) based networks (such as but not limited to the Internet, IP based cellular networks), can be DVB-H compliant networks, WiMax networks, Bluetooth networks, wireless networks, and the like.

**Overall system**

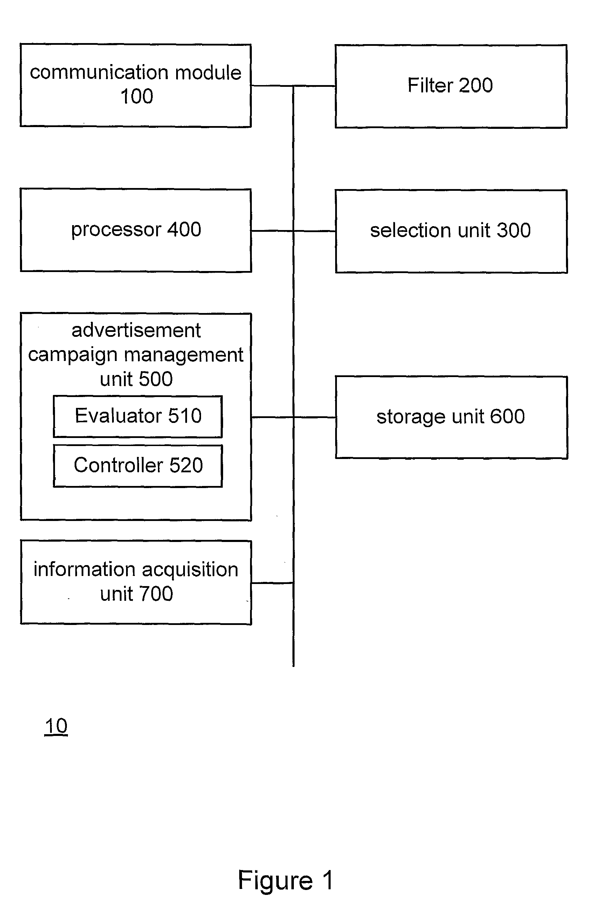

Figure 1 illustrates system 10 according to an embodiment of the invention. System 10 includes: communication module 100, filter 200, selection unit 300, processor 400, advertisement campaign management unit 500; storage unit 600 and information acquisition unit 700.

Communication module 100 is adapted to perform at least one of the following: (i) Receive a user request to receive content, to participate in the sending of the selected advertisement and the requested content to the user mobile device; (ii) receive a request to initiate an advertisement campaign; (iii) participate in sending to a user device the selected advertisement and the requested content; and (iv) receive user responses (also referred to as feedback) to advertisements that were sent to the user. The responses can be stored in storage unit 600, sent to selection unit 300 and to advertisement campaign management unit 500. It is noted that a user response can also include responses that are not sent to system 10. For example, brand awareness increment, acceptance of advertisement messages, buying a product without interacting with system 10.

Filter 200 is adapted to filter advertisements to be sent to the user by applying multiple filtering rules. Filter 200 applies the filtering process in response to a large number of parameters that includes multiple user parameters, multiple content parameters, multiple system parameter and multiple advertisement parameters.

Selection unit 300 is adapted to select a selected advertisement out of filtered advertisements. Selection unit 300 applies the selection process in response to a large number of parameters that includes multiple user parameters, multiple system parameters, multiple content parameters and multiple advertisement parameters.

It is noted that filter 200 and selection unit 300 can filter and select respectively in response to the same parameters or to different parameters. Both filter 200 and selection unit 300 can be responsive (filter or select) to one or multiple parameters. Especially, a single request (from a single user) to receive content can trigger filtering processes and selection processes that are responsive to at least one of the following: (i) multiple parameters that include multiple user parameters; at least one advertisement campaign parameter; at least one advertisement parameter; at least one requested content parameter; and at least one parameter selected from a time of the user request and a location of the user when the user request was sent; (ii) multiple parameters that include multiple user parameters; multiple advertisement campaign parameters; multiple advertisement parameters; multiple requested content parameters; and at least one parameter selected from a time of the user request and a location of the user when the user request was sent; (iii) at least twenty parameters, (iv) at least fifty parameters, (v) at least one hundred parameters.

For simplicity of explanation figure 1 illustrates that all mentioned above entities are connected to each other by a single bus (or bridge). Those of skill in the art will appreciate that these entities can be connected to each other by multiple virtual and physical communication channels. Each of the mentioned above entities can include hardware, software, middleware, firmware or a combination thereof. Each entity can be characterized by a centralized, distributed or hybrid configuration. For example, a single entity can include multiple sub-entities that are connected to each other via one or more networks.

Filter 200 is adapted to filter advertisement by applying advertisement frequency rules. These advertisement frequency rules limit the amount of advertisements that can be sent during predefined time periods. Conveniently, filter 200 is adapted to filter advertisements by applying user filtering rules, advertisement filtering rules and advertisement campaign filtering rules. Advertisement filtering rules limit the frequency of a provision of a certain advertisement while advertisement campaign filtering rules apply to the whole advertisement campaign. Additionally or alternatively, filter 200 is adapted to filter advertisements by applying advertisement management system filtering rules. User filtering rules can be defined by the user, but this is not necessarily so. For example, system 10 can estimate user filtering rules of a certain user based upon user parameters, based upon user filtering rules of another user. User filtering rules can be provided by an entity such as a system administrator, advertisement campaign owner, user mobile device network provider, and the like. Advertisement management system filtering rules refer to limitations or constraints relating to system 10. For example, system 100 cannot output (or generate) more than X1 advertisement per second, or cannot output (or generate) more than X2 advertisements of a certain type (for example overlay advertisements, SMS advertisements, and the like) per second.

Conveniently, not all advertisement filtering rules have the same priority. For example, filtering rules that were provided by a user can have a higher priority then other filtering rules. Yet for another example, advertisement management system filtering rules can have a higher priority than advertisement filtering rules and advertisement campaign filtering rules.

Few examples of filtering rules may include: (i) Don't send to a user more advertisements today, (ii) Don't send to a user a certain advertisement ever again, (ii) send to a user no more than three advertisement a day, (iv) Don't send to a user a certain advertisement for the next week; (v) The user should not receive more that 15 advertisements during the next month; (vi) Don't show a user any advertisement from a certain advertiser for the next 48 hours; (vii) Show at maximum 2 advertisement within a single session; (viii) Show at maximum 10 advertisements to a user during 7 consequence days; (ix) Once a specific advertisement was delivered 3 times, don't show it again to the user during a period of 5 days; (x) Once an advertisement from a specific advertisers was delivered 2 times, don't show advertisements from the same advertiser during the next day; (xi) Once an advertisement was shown once, enforce it's delivery to the same user for 2 more time during the next day.

According to various embodiments of the invention selection unit 300 performs at least one of the following or a combination thereof: (i) select a selected advertisement to be sent to the user device by applying a user prediction model that predicts a user response to an advertisement that is sent to the mobile user device; wherein the selected advertisement is sent to the user device in addition to the requested content; (ii) update a user prediction model based upon statistical analysis of large number of parameters that comprises user parameters, content parameters and advertisement parameters; (iii) updates a user prediction model by applying machine learning algorithms; (iv) repetitively generates a new version of a user prediction model; compare the new version of the user prediction model to an older version of the user prediction model and determine whether to replace the older version of the user prediction model by the new version of the user prediction model based upon the comparison; (v) compares between a reliability and quality of each version; (vi) selects an advertisement in response to predefined selection rules and (v) apply the user prediction model on a very large number of parameters.

According to various embodiments of the invention processor 400 performs at least one of the following or a combination thereof: (i) determine an advertisement area in which an advertisement should be displayed; (ii) generate an advertisement such as to appear only within the advertisement area; (iii) generate an advertisement by selecting an advertisement representation which best f its the advertisement area and the user mobile device characters and then modify the representation as necessary. Different representations of the same advertisement may differ from each other by various parameters including but not limited to their resolution, size, media format, color scheme, and the like; (iv) generate hybrid images that include selected advertisement information and requested content information. The hybrid images can include advertisements that are overlaid on content; (v) generates hybrid images while minimizing encoding and decoding steps,(vi) generates hybrid images while minimizing size changes between content images and corresponding hybrid images; (vii) generate hybrid images that include selected advertisement overlaid over requested content while limiting an encoding to an area the corresponds to an overlay image and to a small interfacing area that include motion vectors that point to the overlay area, if such small interfacing area exists; (viii) insert advertisement into requested content while minimizing encoding and decoding steps; (ix) insert advertisement into requested content while reducing audio level changes between advertisement audio and content audio; (x) insert advertisement into requested content while determining a gain factor of an advertisement audio in response to a gain factor of content audio of a content portion that is proximate to the advertisement; (xi) insert advertisement into requested content while setting the gain factor of advertisement audio to be substantially equal to a gain factor of content audio of a content portion that is proximate to the advertisement.

Advertisement campaign management unit 500 includes evaluator 510 for evaluating a requested advertisement campaign in view of a relationship between expected advertisement campaign impressions, impression limitations (such as an amount of impressions, types of impressions, timing of impressions) and impressions expected to be generated by an advertisement system (such as system 10) during an advertisement campaign duration; and controller 520 that is adapted to respond to the request to initiate the advertisement campaign in response to the evaluation.

Storage unit 600 can include information of various types. Conveniently, system 10 is connected to multiple storage units that store multiple databases. Furthermore, each unit out of units 100, 200, 300, 400 and 500 can have its own "local" storage units. The databases can include users parameters, advertisement parameters, requested content parameters, advertisements, requested content and the like.

Information acquisition unit 700 retrieves information (such as parameters) from various resources. These resources can include cellular network provider databases, advertiser campaign owner data bases, content providers databases, CDRs, system parameters databases and the like. It conveniently obtains vast amounts of information such as to provide very large number of parameters of various types.

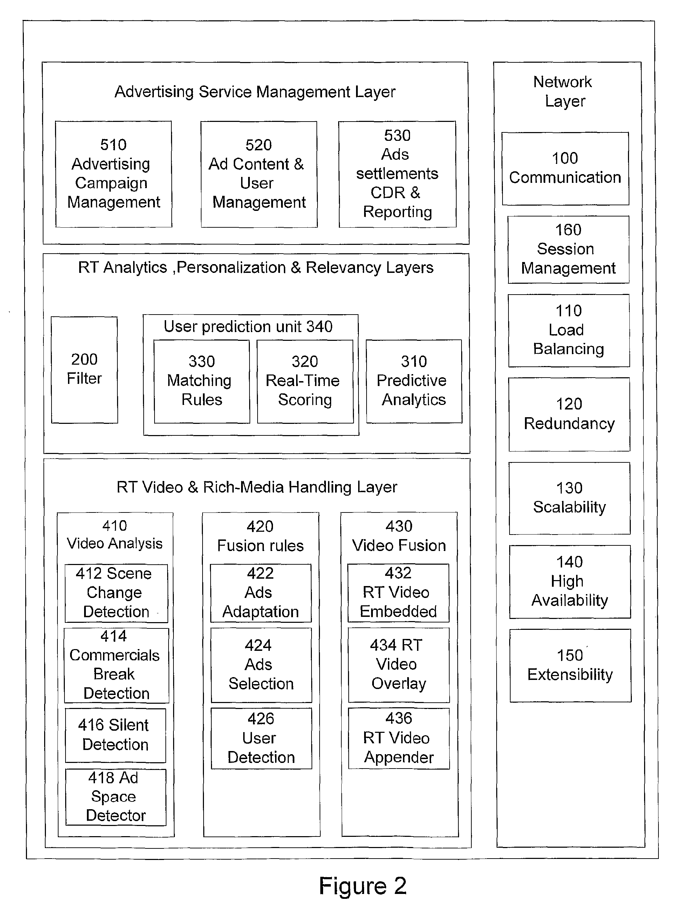

Figure 2 provides a more detailed description of system 10 according to an embodiment of the invention.

The various entities that form system 10 are included in four layers.

The first layer is referred to as "RT video & rich media handling layer" and corresponds to processor 400 of figure 1. RT represents real time. The second layer is termed "RT analytics, personalization & relevancy layer" and corresponds to filter 200 and selection unit 300 of figure 1. The third layer is termed "advertisement service management layer" and corresponds to advertisement campaign management unit 500. The fourth layer is referred to as "network integration" layer and include communication module 100 as well as additional components.

RT video & rich media handling layer is for media handling which is performed in real time. There are shared components between the different media types (video, banners, links, etc...) and there media specific components. In a nut shell, this layer includes video analysis entities 410, fusion rules entities 420 and video fusion entities 430.

Video analysis entities 410 include: advertisement space detection entity 418, scene change detection entity 412, Commercial break detection entity 414 and silent detection entity 416.

Advertisement space detection entity 418 that automatically detects areas (spaces) with low motion (representing low importance areas) within images. Such areas can be a sky area, sea, or background. This component can be used to identify areas in an image where an advertisement can be inserted. This component can detect when and where these low importance areas are.

Scene change detection entity 412 automatically detects changes in scenes. This component can be used to create automatic advertisement space within video content.

Commercial break detection entity 414 automatically detects breaks commercials in live Television broadcasts. This component can be used to identify the commercials break and replace them with targeted advertisement. Commercial break detection entity 414 can apply at least one of the following stages or a combination thereof in order to detect commercial breaks: (i) detecting audio level changes (the volume is usually increased during commercial breaks), (ii) detecting logo changes (logos are usually replaced when entering a commercial break and when leaving the commercial break), (iii) detecting predefined images that are usually transmitted when a commercial break starts or ends, (iv) detecting a shot change. It is noted that the commercial break detection is more complicated in networks (such as current cellular networks) where commercial breaks are not preceded by commercial break indicators.

Silent detection entity 416 automatically detects silence in audio tracks. This component can be used to identify places where audio commercials can be inserted.

Fusion rules entities 420 include advertisement adaptation entity 422, advertisement representation selection entity (also referred to as ads selection) 424, and user detection entity 426. These entities are used to determine which advertisement media types should be chosen and how to perform the delivery to the user. Fusion rule entities are common components that are used in all media types.

User detection entity 422 detects the user with all the parameters that can be extracted form the interaction channel (e.g. user agent, bearer, MSISDN, Location and others). It can retrieve information such as available bandwidth of mobile user device, user mobile device type, and the like.

Advertisement representation selection entity 424 selects the appropriate advertisement representation (media type advertisement element) that corresponding to the user (user) within the current interaction method. An advertisement can be delivered in different delivery methods; therefore a single advertisement can have different types of media. The ads selection component matches the correct media type according to the delivery method.

Advertisement adaptation entity 422 can alter the advertisement media element if needed (e.g. add hint tracks, remove hint track, change color space, change size, etc...).

Video fusion entity 430 includes RT video embedded entity 432, RT video overlay entity 434 and RT video append entity 436. These entities perform fusion of the video content and the advertisement.

RT video embedded entity 432 is used to embed video advertisements inside a content clip (e.g. instead of a break commercial, between two news items). RT video append entity 436 appends a video advertisement before the vide content (pre-roll) or after the video content (post-roll). RT video overlay entity 434 inserts a video or running ticker into another video as an overlay.

Advertisement service management layer includes advertisement campaign manager 510, advertisement content and user management entity 520 and advertisement settlement CDR & reporting entity 530.

Advertisement campaign manager 510 creates and manages advertisement campaigns. It can create of new advertisement campaigns, delete old advertisement campaigns and alter existing advertisement campaigns. Conveniently it can support the following functions: define and alter advertisement campaign owners, define and alter of campaigns including assignment of budget and time frames for campaigns; assign logical advertisements and match advertising media elements; define targeting rules and perform inventory management.

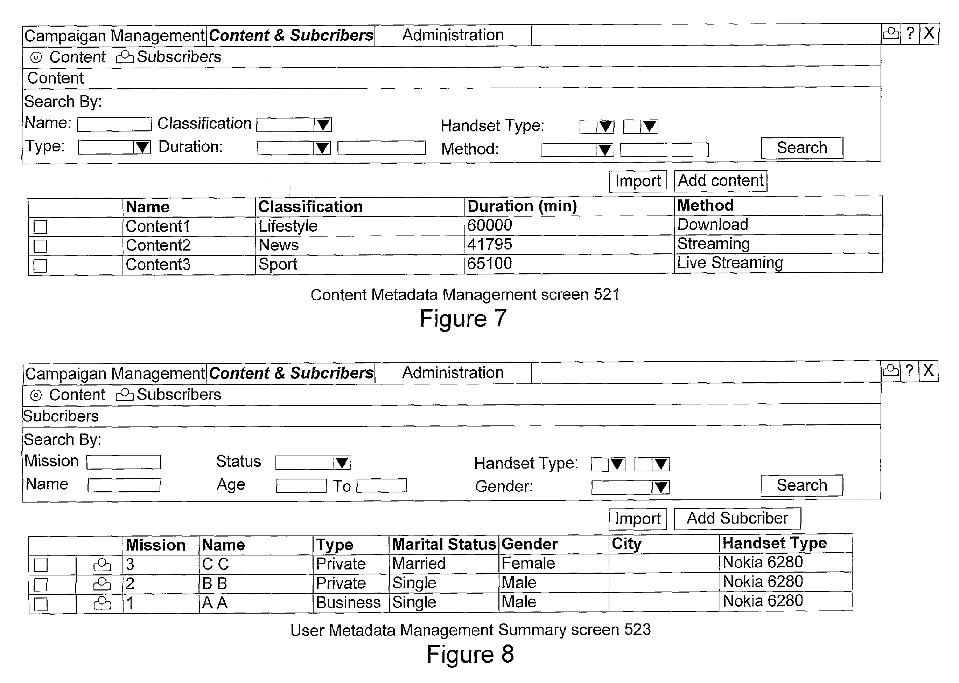

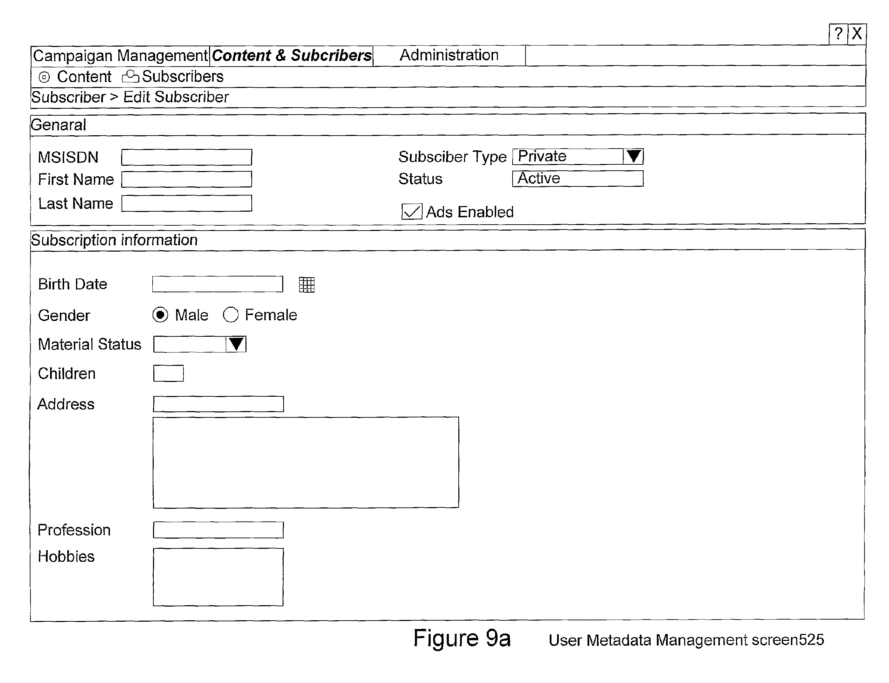

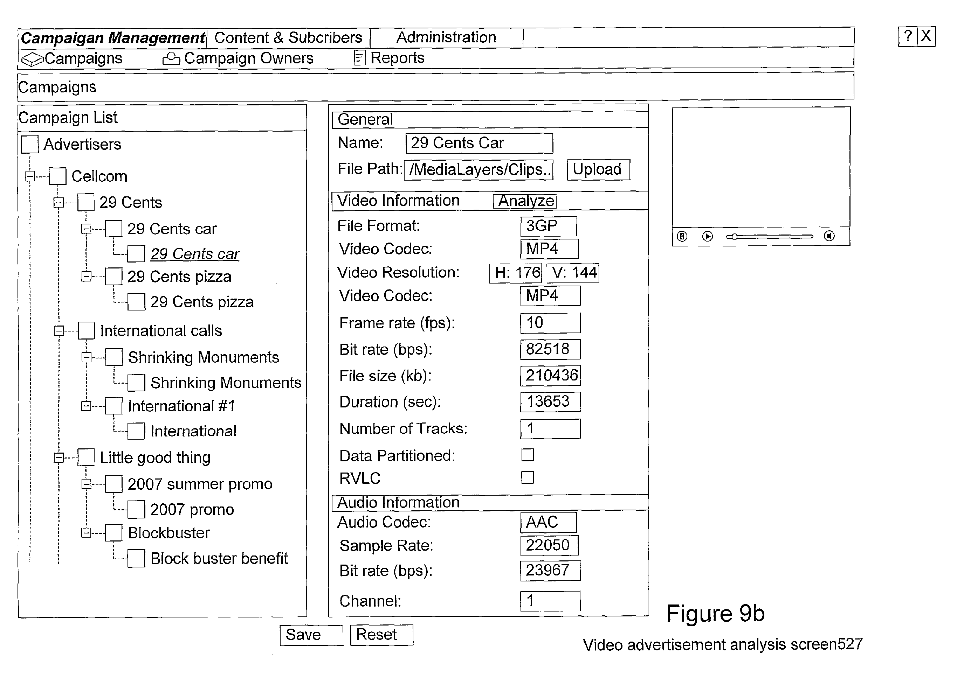

Advertisement content and user management entity 520 manages advertisement parameters and user parameters. It allows to retrieve parameters and display various parameters. Exemplary screens 521, 523, 525 and 527 are included in figures 7, 8, 9a and 9b.

Screen 521 can include the following fields and areas: search area in which search criteria are provided and search result area that can list the search results (content) that are described by the following: content name, content class (news, sport, lifestyle), content duration, method of providing the content to the user (download, streaming, live streaming)

Screen 523 can include the following fields and areas: search area in which search criteria are provided and search result area that can list the search results (users)that can be described by their gender, age, type (private subscriber, company), birth date, material status, address, profession, user device type, as well as other user parameters.

Screen 525 can be used to input user parameters. include the following fields: user gender, age, type (private subscriber, company), birth date, material status, address, profession, user device type, as well as other user parameters.

Screen 527 can include the following fields and areas: advertisement directory, advertisement campaign directory, customer folders, advertisement information area such as name, file path (retrieval information), image from the advertisement, file format, video codec, video resolution, frame rate, bit rate, file size, duration, number of tracks, data partitioned, RVLC, audio codec, sample rate, bit rate and channel. Accordingly advertisement files can be arranged in various manners and each is described by multiple fields.

Advertisement settlement CDR & reporting entity 530 can store each advertisement that was delivered to users, including each advertisement within a single advertisement session that included multiple advertisements.

RT analytics, personalization & relevancy layer performs filtering and advertisement selection operations. It includes matching (also referred to matching rules) entity 330, real time scoring entity 320, predictive analytics entity 310 and filter 200. Matching entity 330 and real time scoring entity 320 form user prediction unit 340.

Matching entity 330, real time scoring entity 320 and predictive analytics entity 310 participate in selecting advertisements and in updating user prediction models that can be utilized during the selection.

Matching entity 330 performs a real time selection that is based upon predefined rules. These rules do not filter out commercials but assist in preferring one advertisement upon another.

Scoring entity 320 can receive one or more user prediction models that were generated by predictive analytics unit 310 or from another source. Predictive analytics unit 310 can generate one or more user prediction models. User prediction models can be generated and/or updated by analyzing information relating to content requested by the user, responses of users to advertisements, advertisement metadata and the like. It is noted that the analyzed information can include information that was obtained during a predefined period. This period can be few days long, few weeks long, few months long and even few years long.

The analysis of information can be implemented in various manners including but not limited to machine learning, statistical based analysis, behavioral analysis, or a combination thereof. For example, the analysis can be performed by using standard data mining tools (e.g. SPSS, SAS, and STATISTICA) using SRM (Structured Risk Minimization) approach. Conveniently, the user prediction model can be generated by prior art tools.

The user prediction model can output a function that weighs various parameters so that when a request to receive content is received each advertisement out of multiple advertisements will be assigned a score. The score represents an estimated probability that this user will respond to an advertisement. It is noted that more than one user prediction model can be used. A selection between a user prediction model to another user prediction model can be responsive to a content parameter, to an advertisement parameter, to a user parameter or a combination thereof. For example, a certain user prediction model can be used when the content is related to sport while another user prediction model can be used when the content is related to comedy.

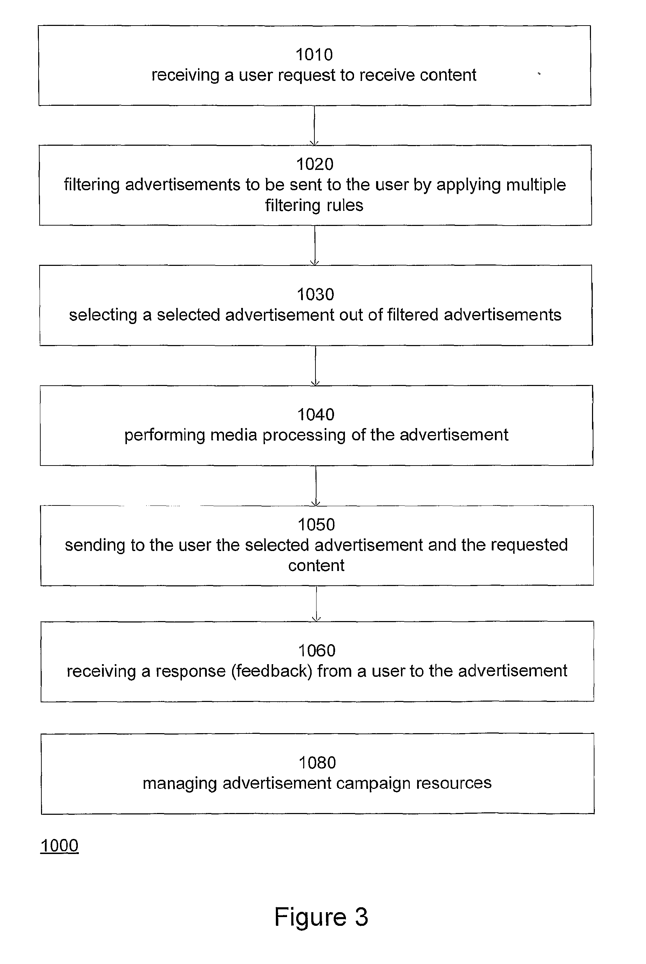

Figure 3 illustrates method 1000 according to an embodiment of the invention.

Method 1000 starts by stage 1010 of receiving a user request to receive content.

Stage 1010 is followed by stage 1020 of filtering advertisements to be sent to the user by applying multiple filtering rules. The filtering is responsive to a large number of parameters that include multiple user parameters; multiple system parameter and multiple advertisement parameters.

Stage 1020 conveniently includes at least one of the following: (i) filtering advertisement by applying advertisement frequency rules; (ii) filtering advertisements by applying user filtering rules, advertisement filtering rules and advertisement campaign filtering rules; (iii) filtering advertisements by applying advertisement management system filtering rules and advertisement rules; (iv) filtering in response to multiple user parameters; at least one advertisement campaign parameter; at least one advertisement parameter; at least one requested content parameter; and at least one parameter selected from a time of the user request and a location of the user when the user request was sent; (v) filtering in response to multiple user parameters; multiple advertisement campaign parameters; multiple advertisement parameters; multiple requested content parameters; and at least one parameter selected from a time of the user request and a location of the user when the user request was sent; (vi) filtering in response to at least twenty parameters; (vii) filtering in response to at least fifty parameters; (viii) filtering in response to at least one hundred parameters.

Stage 1020 is followed by stage 1030 of selecting a selected advertisement out of filtered advertisements. The selecting is responsive to a large number of parameters that include multiple user parameters; multiple system parameter and multiple advertisement parameters.

The selection can be responsive to utilization of advertisement campaign resources.

Stage 1030 is followed by stage 1040 of performing media processing of the advertisement. Stage 1040 can include at least one of the following: (i) determining an advertisement area in which an advertisement should be displayed and sending to the user the selected advertisement such as to appear only within the advertisement area; (ii) generating hybrid images that comprise selected advertisement information and requested content information; (iii) generating hybrid images while minimizing encoding and decoding steps; (iv) generating hybrid images while minimizing size changes between content images and corresponding hybrid images; (v) generating hybrid images that comprise selected advertisement overlaid over requested content while limiting an encoding to an area the corresponds to an overlay image and to a small interfacing area that comprises motion vectors that point to the overlay area, if such small interfacing area exists; (vi) inserting advertisement into requested content while minimizing encoding and decoding steps; (vii) inserting advertisement into requested content while reducing audio level changes between advertisement audio and content audio; (viii) inserting advertisement into requested content while determining a gain factor of an advertisement audio in response to a gain factor of content audio of a content portion that is proximate to the advertisement; (ix) inserting advertisement into requested content while setting the gain factor of advertisement audio to be substantially equal to a gain factor of content audio of a content portion that is proximate to the advertisement.

Stage 1040 is followed by stage 1050 of sending to the user the selected advertisement and the requested content.

Method 1000 conveniently includes stage 1080 of managing advertisement campaign resources. It is noted that stage 1080 can be executed in parallel to either one of stages 1010, 1020, 1030, 1040, 1050 and 1060.

### Selection unit

Selection unit 300 selects between advertisements that were filtered by filter 200. Filtered (accepted) advertisements are provided to a user model that can be responsive to hundreds of parameters, relevant to a certain interaction of the user with system 10.

These parameters can be available at a mobile operator's (or service provider or other provider) data base or other data sources (including customer's demographics, billing and usage history, content and campaign characteristics, ads response history etc.) and hundreds of available advertisements and their data.

The filtering and selecting processes are executed in real time, and can take into account the specific content element consumed by the user together with other interaction related parameters like the specific time and location of the user.

According to another aspect of the invention, one or more model parameters such as but not limited to a quality and reliability factors indicating the quality of the user prediction model and it reliability might also be provided.

A user predictive model can be generated or updated in a periodical manner, random manner, semi-random manner and additionally or alternatively in response to triggering events. New versions of a user prediction model can be generated, compared to an older version and replace the older version based upon the comparison. The comparison can focus on the quality and reliability of the user prediction model.

Matching rules unit 330 performs a selection based upon predefined selection rules. These predefined selection rules can prefer one advertisement upon another. These rules can be defined by a system user and can be based upon experience, responsive to various regulations and the like.

It is noted that system 10 can receive instructions that indicate when to apply matching rules entity 330, when to apply real time scoring entity and when to apply both. This determination can be dependent upon the advertisement campaign that is being evaluated, the user that should receive the advertisement, and the like. Typically the highest scoring filtered advertisement will be selected.

It is noted that one or more user prediction models can be used. A user prediction model can be generated per advertisement campaign type (sports, commodities), per gender (males, females) and the like.

It is noted that the response of a new user can be predicted even based upon partial information. Even before the user interfaces with system 10, wherein this user prediction model will be based upon user parameters (such as demographic parameters) retrieved by system 10.

The same applies to predicting the response to new advertisements or campaigns that were not yet fully evaluated. When a new advertisement or advertisement campaign is added to the system, then the user response to this advertisement can be estimated based upon estimated responses to existing advertisements. Existing parameters of the new advertisements or new advertisement parameters or estimated parameters of such advertisements can be provided to the user estimation model.

Each user evaluation model is evaluated to determine one or more model parameters such as but not limited to the quality of the user prediction model (i.e., how well does the model describe the existing, data used for building it) and the reliability (robustness) of the user prediction model (how well will the user prediction model predicts future data).These two parameters (quality and reliability) can be weighted in various manners to determine whether to replace the old version by the new version of the user prediction model. The same applies to other model parameters.

If the new (updated) version of a user evaluation model is better in one or more predefined model parameters such as in its quality and reliability, or in a predefined combination of these parameters then the new version will replace the old version of the user prediction model. It is noted that a user prediction model can be evaluated until predefined values of model parameters are achieved, for example until a predefined quality and/or reliability levels are achieved.

It is noted that user predictive unit 340 can identify significant parameters. Conveniently, this unit can filter out non-significant parameters. A significance indication can be provided by predictive analytics 310.

As indicated above, a user prediction model can be generated or updated by using machine learning techniques and additionally or alternatively using statistical analysis techniques. Other techniques can also be applied.

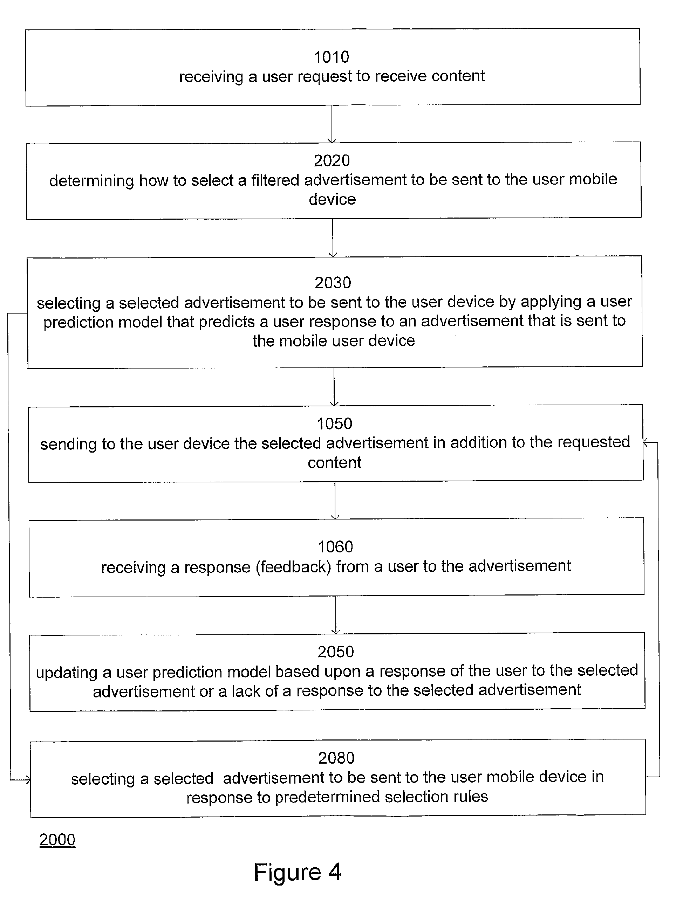

Figure 4 illustrates method 2000 for providing advertisements to a mobile user device, according to various embodiments of the invention.

Method 2000 starts by stage 1010 of receiving a user request to receive content.

Stage 1010 is followed by stage 2020 of determining how to select a filtered advertisement to be sent to the user mobile device. The selection can be responsive to predetermined selection rules (stage 2080), to user prediction model (stage 2030) or a combination of both.

Stage 2030 includes selecting a selected advertisement to be sent to the user device by applying a user prediction model that predicts a user response to an advertisement that is sent to the mobile user device.

Stage 2030 is followed by stage 1050 of sending to the user device the selected advertisement in addition to the requested content.

Stage 1050 is followed by stage 1060 of receiving a response (feedback) from a user to the advertisement. It is noted that a lack of response is also regarded as a feedback.

It is noted that stages 1010, 1050 and 1060 can be executed by system 1 of figure 1 while stages 2020, 2030 and 2080 are executed by selection unit 300 of figure 1.

Stage 1060 is conveniently followed by stage 2050 of updating a user prediction model based upon a response of the user to the selected advertisement or a lack of a response to the selected advertisement. It is noted that the updating can also be triggered by other events. Stage 2050 can also include repetitively generating a new version of a user prediction model; comparing the new version of the user prediction model to an older version of the user prediction model and determining whether to replace the older version of the user prediction model by the new version of the user prediction model based upon the comparison. It is noted that multiple iterations of stages 1010, 2020, 2030, 1050 and 1060 can be executed before executing stage 2050.

**Advertisement area detection**

According to an embodiment of the invention system 10 can generate an advertisement that will be displayed only on a portion of a display of a user mobile device. The generation can include selecting an advertisement representation (such as a file) that best fits the advertisement area and then adjusting the advertisement representation such as to fit to the advertisement area.

The advertisement area can be determined in advance, by processing content such as but not limited to non-live content. Alternatively, the advertisement area can be determined in real time, by analyzing live content. It is noted that real time analysis can also be performed on non-live content.

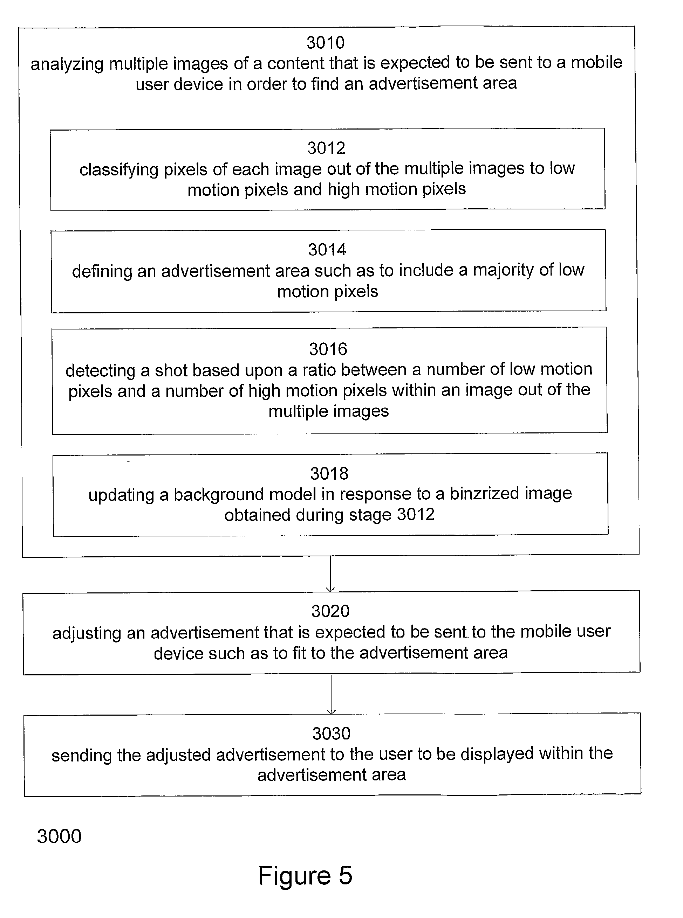

Figure 5 illustrates method 3000 for adjusting advertisements to be provided to a mobile user device, according to an embodiment of the invention.

Method 3000 starts by stage 3010 of analyzing multiple images of a content that is expected to be sent to a mobile user device in order to find an advertisement area. The advertisement area is conveniently smaller than an image. Thus, advertisement as well as requested content can be simultaneously displayed on a user screen.

Conveniently, off line analysis can take into account a sequence of images that spans along a period that is longer than the advertisement duration while real time analysis can take into account a shorter sequence of images. These image sequences can form a video stream.

Stage 3010 conveniently includes stage 3012, 3014, 3016 and 3018.

Stage 3012 includes classifying pixels of each image out of the multiple images to low motion pixels and high motion pixels. The motion can be determined by the difference between values (such as direct current values) of corresponding pixels at each evaluated image and a background model that may take into account background pixels of one or more background images. The model can be based upon binarized images that were obtained before an evaluated image. Each evaluated image can be used to update the background model. The background model is conveniently updated by using a Kalman filter, thus allowing a compensation for various changes such as lighting condition changes. The advertisement area can be the least noisiest area in the image.

Stage 3012 can include classifying pixels of each image out of the multiple images based upon direct current components of a partially decoded image. Conveniently, an image is Huffman decoded and the direct current elements of the decoding process are taken into account.

The pixels can be classified to low motion pixels and high motion pixels in reference to a threshold. This threshold can be dynamically calculated. Example for such calculation can be: temporal Gaussian cumulating. The value that is taken is a minimum threshold (delta between foreground and background pixel) value for predefined percentage of the pixels.

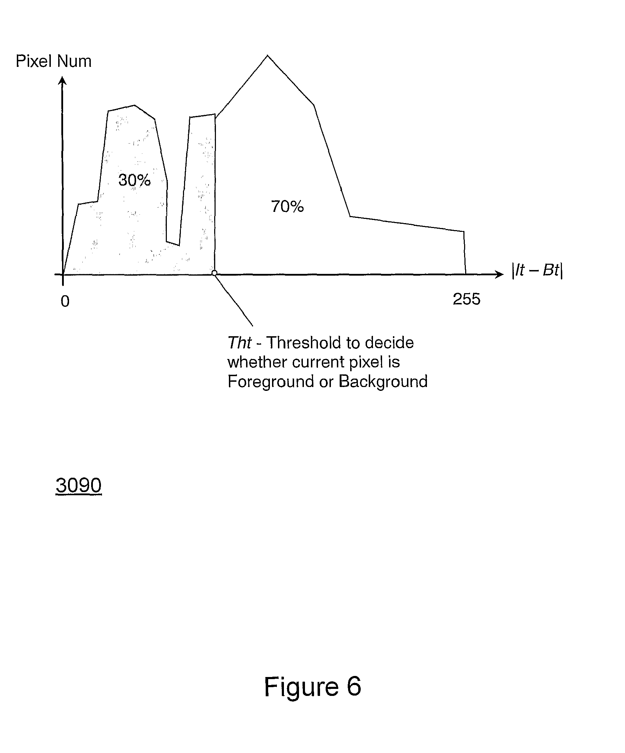

Stage 3012 can include generating a histogram that represents a distribution of pixels and their motion. Such a histogram (denoted 3090) is provided in figure 6. The histogram can be used for threshold calculation. The X axis of the histogram represents all the range of the luminance differences. Each bin represents number of pixels in the image with a given difference. The threshold for the foreground/background classification is taken as a maximal threshold value (X-Axis) that fits to the predefined percentage of the pixels of the image. (Figure 6 illustrates a percentage value of 30%).

Stage 3014 includes defining an advertisement area such as to include a majority of low motion pixels. Conveniently, stage 3014 includes finding the advertisement area in response to a motion level of pixels and to a distance of pixels from edges of an image. Pixels that are located closer to an image edge are more likely to be included in an advertisement area.

Stage 3016 includes detecting a shot based upon a ratio between a number of low motion pixels and a number of high motion pixels within an image out of the multiple images.

Stage 3018 includes updating a background model in response to a binarized image obtained during stage 3012.

Stage 3010 is followed by stage 3020 of adjusting an advertisement that is expected to be sent to the mobile user device such as to fit to the advertisement area.

Stage 3020 is followed by stage 3030 of sending the adjusted advertisement to the user to be displayed within the advertisement area. Stage 3030 can be included in stage 1050 of figure 3.

Video and audio manipulation

Various video and audio processing schemes can applied by processor 400. These processing schemes are aimed to minimize resources consumed during advertisement insertion, to minimize the bandwidth changes resulting from image processing and provide seamless advertisement insertion.

Audio manipulation aims to maintain synchronization between audio and video and control the audio gain in order to preserve user experience.

Video Manipulation feature enables changing a video and audio content in order to insert advertisements into original content. The video content can be delivered in various mechanisms such as download (e.g. HTTP) or over streaming protocols (e.g. RTSP/RTP). There are lots of manipulation such as concatenation, overlay semi transparent overlay, detecting and replacing already embedded advertisements etc'.

The manipulation of video may be done in the compressed domain, in the uncompress domain or both. The processing of the video data may be done in real-time (such as in a rate that corresponds a play rate of the video or a so called "network" rate) or at a so called super teal time rate (as fast as the CPU can), the processing type depends on the delivery mechanisms and latency required.

According to an embodiment of the invention processor 400 can select out of multiple advertisement representations the advertisement representation that best fits an advertisement area and has a duration that corresponds to an allowed advertisement length. It is noted that length (time domain) issues can be resolved by filter 200.

The multiple representations of the same advertisement can differ from each other by the bandwidth required to convey them, codec parameters, sample rates, and the like.

The selection can be responsive to various parameters including resolution, size of advertisement area, color scheme and the like. After this selection processor 400 can determine not to further process the advertisement or to further process it, depending on the match between the advertisement parameters and the advertisement space and duration parameters, and on content parameters.

A match between advertisement parameters and content parameters can reduce and even assist in eliminating decoding and re-encoding. Conveniently in order to perform advertisement insertion without decoding and re-decoding such a match should exist.

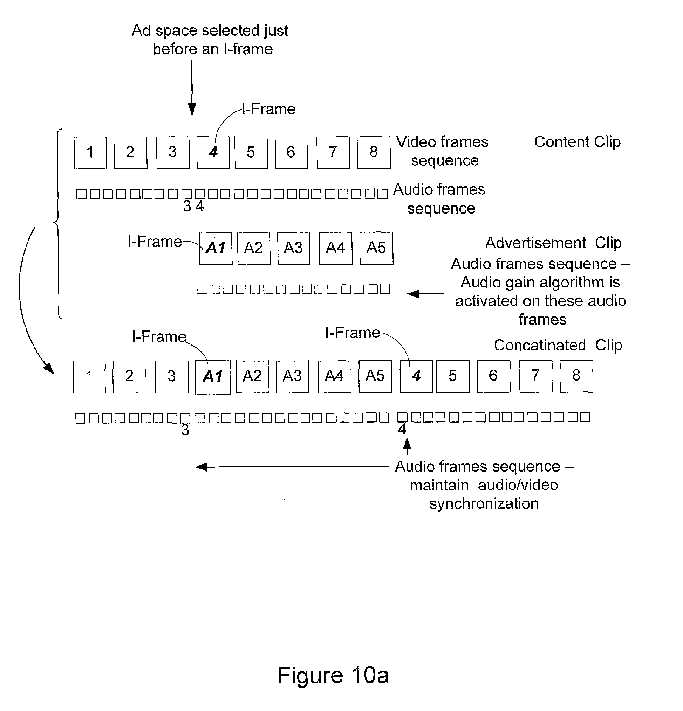

Processor 400 will try to minimize decoding and re-encoding. Figure 10a illustrates an advertisement insertion without re-encoding according to an embodiment of the invention. Simple concatenation can be applied if the insertion point is right before a synchronization point of the requested content (for example- just before an I frame). If the selected location is not just before a synchronization point, then the content should be processed (starting from a beginning of a group of pictures that included the insertion point) so that the requested content frame that immediately follows the insertion point becomes a new synchronization frame (can be come an I frame itself). Conveniently, this new synchronization frame and other frames till the end of that group of pictures.

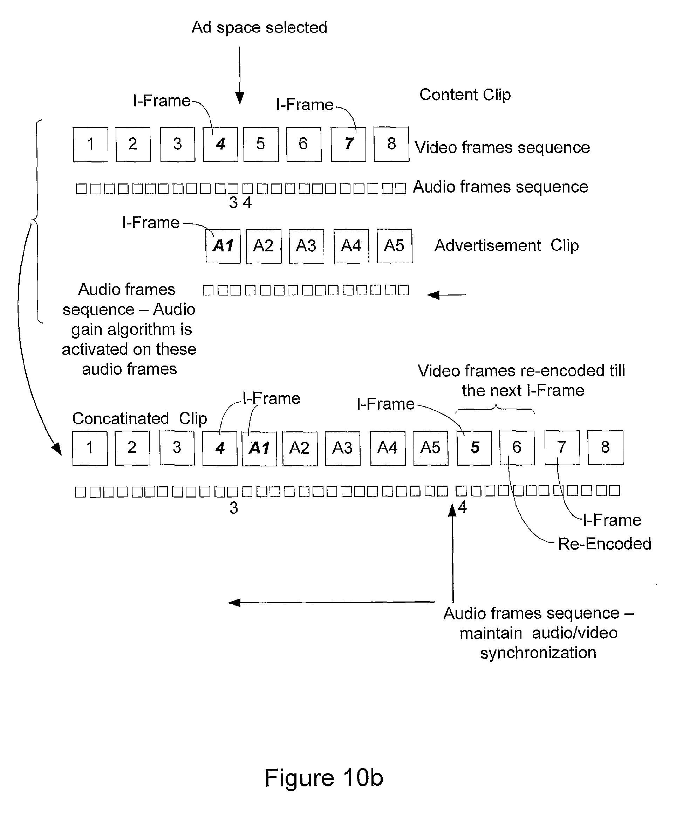

Figure 10b illustrates an advertisement insertion according to an embodiment of the invention. Typically the length of such encoding interval is very small such as 1-5 seconds hence result minimal use of resources. For audio only clips, typically the concatenation is simpler since audio codecs are simpler and typically with no or very close sync points. Therefore no re-encode should be done. Audio part in concatenation should be controlled in order to preserve audio-video synchronization and also the gain of the advertisement should be tuned.

In case that the frames after the advertisement frames are not referenced more than one frame backwards - only one frame should be re-encoded as I-frame. This can be accomplished by decoding the main clip frames from the last I-fame before the cutting point until the cutting point and than re-encode the cutting point frame as I-frame. Because all sequential frames reference the un-compressed frame which we did not change they can be copied without any decoding/encoding.

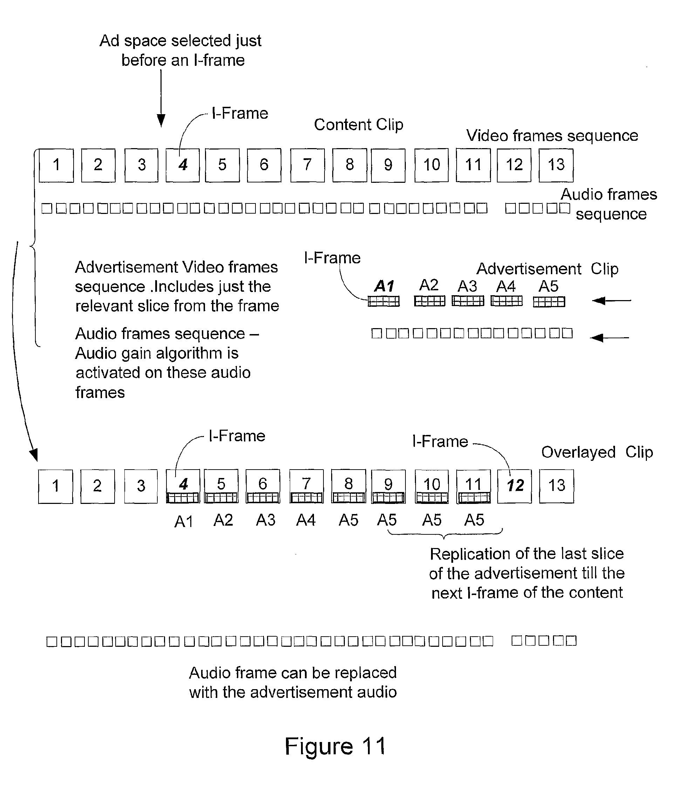

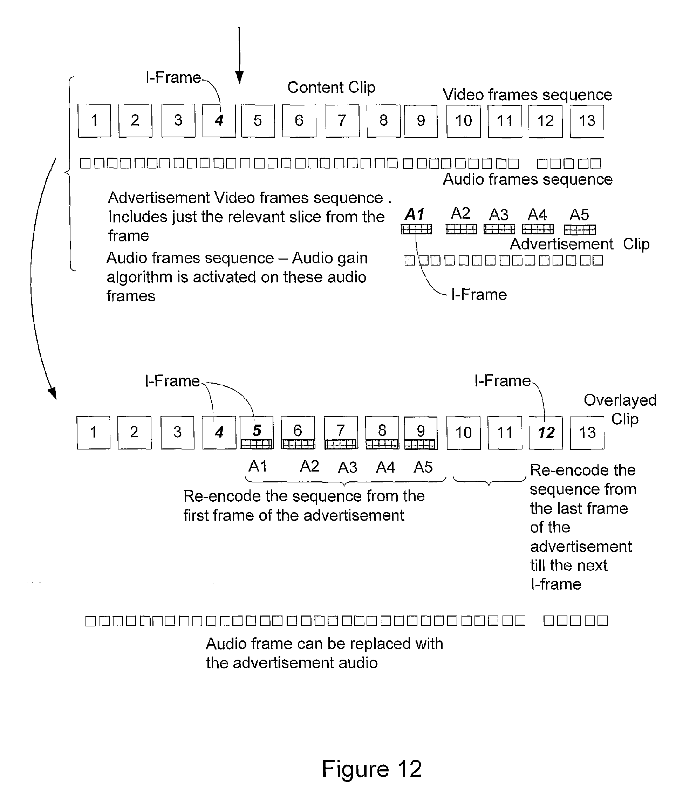

Figure 11 illustrates an overlay without encoding according to an embodiment of the invention. Overlay can be done with no re-encoding procedure. In some codecs the basic component for compression is a macro block (for example - MPEG4). The overlay operation replaces the required set of macro blocks in the original clip (required content) with the selected advertisement clip. Right after the embedded clip should replace the original macro block till the next full sync point which allow the decoder to sync again on the original video. Figure 12 illustrates overlay with minimal decoding and re-encoding. It includes re-encoding all frames during the advertisement overlay clip operation. It may also require to re-encode the first frame after the advertisement ends till the next synchronization point (for example I-frame) in the content sequence video frame.

It is noted that once an advertisement is inserted metadata relating to the newly generated video stream (or video file) should be updated accordingly. Many codecs store timing information as part of the bit stream. When inserting advertisement frames to an original video bit stream (requested content), this information should be changed so it will be monotonic and correct along the new concatenated stream. Some codecs (like MPEG4) may have different resolution for this timing information (meaning the number of bits that represent the timing information can vary on different streams. If such a difference is found between the advertisement stream and the original content stream, the advertisement stream will be adapted so it will have the same resolution as the original stream (again without doing decoding/encoding).

It is noted that during a concatenation process each video codec format is handled differently according to its specific format (each video bit stream has its specific parameters that should be handled separately). For example - (i) H263 - TR field need to be updated; (ii) MPEG4 - vop_time_increment field need to be updated.

**Network layer**

Network integration layer 100 can receive and transmit information over various communication links. It conveniently includes session management entity 160, load balancing entity 110, redundancy entity 120, scalability entity 130, high availability entity 140 and extensibility entity 150. Network integration layer 100 can also include various entities such as but not limited to a switch that is connected to load balancing unit and to servers that implement the functionalities of other layers of system 10.

System 10 can interface with various services and providers as well as receive and transmit content and advertisements in different formats or types. This includes, for example, video on demand (VOD) and streaming television providers, video downloaders, live video and television providers, mobile web/internet providers (for example WAP providers), DVB-H and MediaFLo compliant content providers, place and time shifting content, UGC (legacy and IMS) compliant media providers, video portals, video calls, SMS services, MMS services, email providers, IMS application providers, IMS services and the like.

System 10 can have at least one of the following functionalities: (i) HTTP proxy functionality that can support HTTP request manipulations which include: Extraction of user information, Extraction of content / page the user accesses, Insert advertisement while downloading and Interception of application based data. (ii) NFS proxy functionality that supports manipulation of the NFS lookup to extract control data into system10, such extraction is used to intercept the NFS data, perform manipulations on the video and return the manipulated data into the NFS client to be provided to users. (iii) CIFS functionality that supports manipulation of the CIFS lookup to extract control data into system 10, such extraction is used to intercept the CIFS data, perform manipulations on the video and return the manipulated data into the CIFS client to be provided to users; (iv) RTP/RTCP probe/proxy functionality that supports data monitoring (Probe) and manipulation (Proxy). Monitoring the data means that the pass through of the data is supported without data changes. UDP/RTP data can be changed and RTP header and RTCP may be changed as well during this process. RTP Data and header are subject to changes. In case of Proxy, the data is forward to the Content Handler component for processing; (v) RTSP probe/proxy functionality that supports data control monitoring (Probe) and manipulation (Proxy). Monitoring the data means that the pass through of the data control is supported without data changes. Proxy means that TCP/ RTSP data can be changed. All RTSP commands are supported for manipulation. (vi) Data base connectivity functionality that provides access to user data and requested content metadata. This information is stored in databases that are accessible to system 10. (vii) SOAP API (or other API) that facilitates interfacing with various applications. SOAP API over HTTP can be used as an API to system 10. This API is used to send and receive information to system 10. The following external systems can include: (i) Java / IMS handset clients, (ii) Search Engines, (iii) Mobile Web Portals, (iv) Massaging GW (SMS/MMS), (v) H.324MGW / H.324M Application Server, and (vi) IMS application Servers (SIP servers). The API can include the following functionalities: receive User Data and Content Metadata from external system, deliver advertisement to external systems (Video, Image, Text) and receive feedback (Click Through) information from external systems.

A user can interact with system 10 and content providers by various manners. The user can also provide different feedbacks.

For example, the various manners can include: (i) Click-to-Landing Page: in Mobile Web / Search Engines /Applications / Messaging the user is redirected to an advertisers' pre-published mobile web page, in video Sessions the user can press a special link while watching a video session. Pressing this link the user is redirected to an advertisers' pre-published mobile web page. (ii) Email Opt-In: in Mobile Web / Search Engines / Applications /Messaging the user can enter his email address to receive more information, while in Video Sessions the user can press a special link while watching a video session. Pressing this link redirects the user to a mobile web page where he can enter his email address to receive more information. (iii) Phone Opt-In / Contact Me Opt-In: in Mobile Web / Search Engines / Applications / Messaging the user can enter his phone number to be contacted, in Video Sessions the user can press a special link while watching a video session. Pressing this link enables the user enter his phone number to be contacted. (iv) Click-to-Call: in mobile Web / Search Engines / Applications / Messaging A special link on the mobile web page that creates a call (voice or video) to the advertiser. The destination of the call could be a Voice or Video Call Center, an Interactive Voice Response (IVR) system, an Interactive Voice/Video (IVVR) system or a representative. In Video Sessions the user can press a special link while watching a video session. Pressing this link the user initiates a voice or video call to the advertiser. (v) Click-to-SMS: In Mobile Web / Search Engines / Applications / Messaging A special link on the mobile web page that creates a text message (SMS) that is sent to the advertiser; in Video Sessions the user can press a special link while watching a video session. Pressing this link creates a text message (SMS) that is sent to the advertiser. (vi) Click-to-MMS: in Mobile Web / Search Engines /Applications / Messaging a special link on the mobile web page that creates a multimedia message (MMS) that is sent to the advertiser. The message can include a multimedia attachment as well (e.g.. image, video clip, audio clip); in Video Sessions the user can press a special link while watching a video session. The message can include a multimedia attachment as well (e.g.. image, video clip, audio clip). (vii) Location Finder: in mobile Web / Search Engines / Applications / Messaging the user is redirected to a mobile web page that contains a list of businesses (e.g. car dealer, restaurant, store, etc...). This could be based also on the user current location or place of resident. In video Sessions the user can press a special link while watching a video session. Pressing the link the user is redirected to a mobile web page that contains a list of businesses (e.g. car dealer, restaurant, store, etc...). This could be based also on the user current location or place of resident. (viii) Click-to-Get Coupon: In Mobile Web / Search Engines / Applications / Messaging the user clicks on a link and receives back a coupon which can be redeemed; in video sessions the user is shown a special video clip with an advertisers' message (e.g. "To Get coupon send SMS with keyword coupon to number 777"). The user can initiate a SMS to the advertiser and receive a coupon he can redeem later on. (ix) Play Video with an advertisers' message: A special video clip that contains a message from the advertiser (in addition to the advertisement itself) can be played at different locations in within the video session. This message could be of the type "Send SMS to number xxx". This feedback mechanism could be used in the following methods: Live Video / Audio; VOD Video / Audio; Video download / Audio; or Broadcast Video.

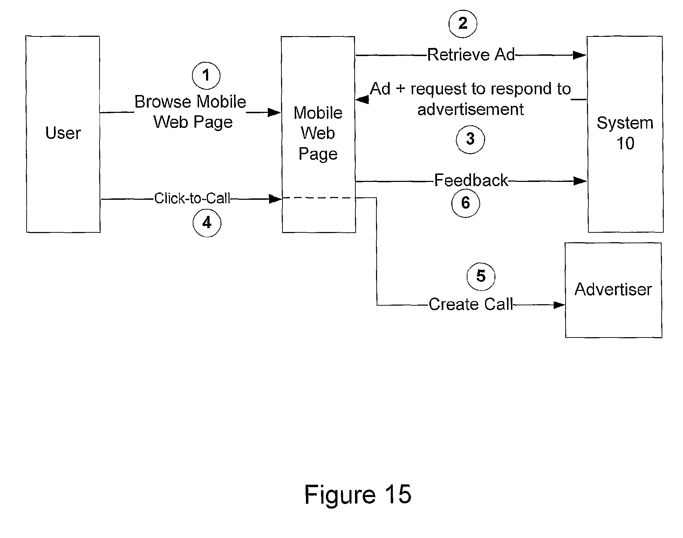

Figure 15 illustrates a click to call scenario according to an embodiment of the invention in which: (i) User browses to mobile web page; (ii) Mobile Web retrieves an advertisement from system 10; (iii) System 10 returns an advertisement with a request to respond to the advertisement(including the click-to-call link); (iv) the user hits the Click-to-Call link on the web page; (v) a call is established between the user and the advertiser; (vii) system 10 is updated with a response of the user (feedback).

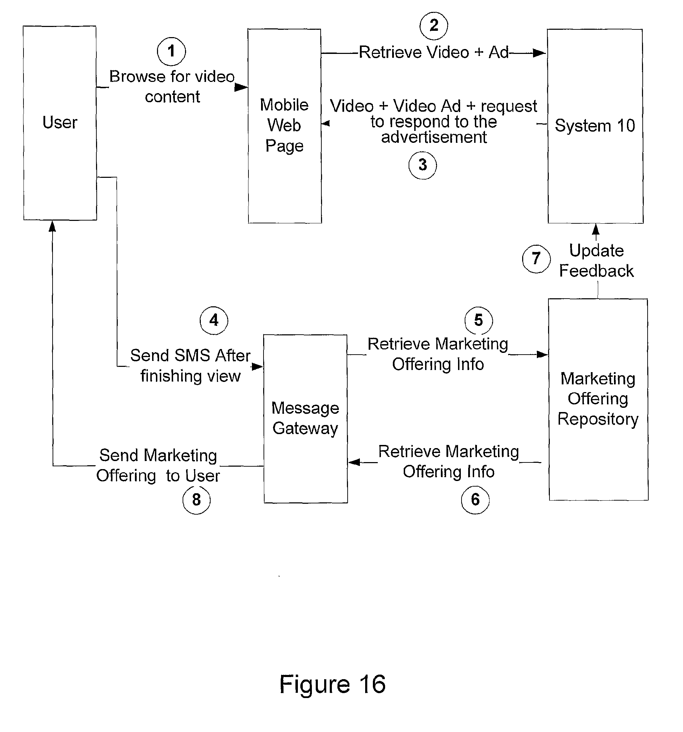

Figure 16 illustrates a scenario according to an embodiment of the invention in which: (i) A User browses mobile web for a video content and hits to watch the video; (ii) Mobile Web retrieves video content and video advertisement from system 10; (iii) System 10 return Video Content, video advertisement and a request to respond to the advertisement; (iv) The user watches video and responds to advertiser (send SMS); (v) Messaging GW retrieves the marketing offering from the Marketing offering repository; (vi) Marketing Offering Repository returns the offering information (e.g. push link, text, image) to the user using messaging GW; (vii) Marketing Offering Repository updates system 10 with the feedback; and (viii) Messaging GW sends marketing offering to user.

It is noted that system 10 can act as a proxy between a streaming video sources and an end client. System 10 can operate in a manner that is transparent to the user and insert advertisement in the requested content.

It is further noted that system 10 can receive a full media file, scan the file to located existing advertisements within the file and determine whether to replace the advertisement according (for example) to advertisement management rules.

It is further noted that system 10 can automatically detect API included within an application file and utilize these APIs to interact with the applications.

**Advertisement campaign Management**

Inventory is the estimated amount of impressions that can be delivered by system 10 according to its structure and served users. An impression corresponds to a single instance of an advertisement. In other words a single advertisement that is sent to a single user is referred to as an impression. Each system has an estimated number of impressions (or various types) that will be delivered to users all media types. Conveniently, after a learning period an estimation of the impressions that were delivered by system 10 can be done according to the gained impression history. Inventory could be in sold or unsold conditions. Sold inventory is defined as the fraction of the estimated impressions that has allocated campaigns and advertisements. Unsold inventory is defined as the fraction of the estimated impressions that doesn't have allocated campaigns.

The management process allows a user (such as advertisement provider) to identify the current status of the inventory in the system and particularly the following: Make sure a campaign has enough inventory, Analyze if inventory usage and delivery goals are being met, Analyze inventory performance, Analyze which inventory can be sold and which is oversold and provide Base for Pricing and Bidding.

Inventory can be computed and managed in a hierarchy method starting at full inventory in the system, going through the delivery channels and ending with a specific content.

Conveniently, the management process can respond to a request to initiate an advertisement process in response to various advertisement campaign parameters that may include at least some of the following or a combination thereof: (i) advertisement type - for example whether the advertisement is a video stream, a banner or text, (ii) service type - the type of service that provides the user the requested content - for example whether the content is live content, video on demand, web page (such as portal), whether the user downloads content, games or application, (iii) advertisement insertion type - for example whether the advertisement is concatenated (pre-roll, mid-roll or post-roll), whether the advertisement is overlaid (video on video, split screen); whether the advertisement is a plain picture of an animated GIF; (iv) content category (sports, news) and sub-categories (football, soccer, international news, domestic news) that can be arranged in multiple hierarchical levels, (v) contextual parameters that indicate the context in which the user requests content - for example whether the user requests content while browsing a certain web site, whether the user receives broadcast content, (vi) timing parameters- such as the start date and end dates of the advertisement campaign, time of day (morning, noon, afternoon, evening night, certain hours) in which the advertisements sound be provided to users; (vii) number of impressions per advertisement campaign; (viii) user parameters of users that belong to a target population - for example their age, gender, location; (ix) additional parameters not listed above.

The management process can process multiple of these mentioned above parameters and especially more than five, seven or nine parameters and provide available impressions. It can monitor the impressions that were actually provided and provide reports of these provided impressions and their parameters. It can also provide a report of booked impressions and their parameters.

Evaluating resource utilization (impressions that were actually sent), estimating available bookings and evaluating requests to initiate an advertisement campaign can benefit from the multi-dimensional management process that takes into account the mentioned above impression parameters.

It is noted that various evaluations can be executed in various manners such as but not limited to a periodical manner (for example- once a day), in response to events or a combination thereof.

A system capability to provide impressions can be estimated by either one of the following or a combination thereof: (i) an external estimation or forecasting. The external estimation can be based on operator's (or service provider's) statistics. Using this method, the operator (or service provider) estimates the maximal amount of traffic that the system will serve. This estimation can be done periodically based on the operator's (or service provider's) subscriber's activity. The estimation is a fixed number that serves as a capping of the amount of impression that the system is allowed to serve, this estimation can be changed according to updated behavior statistics. Forecasting involves using system 20 internal impression history to create a projected forecast of the number of impressions (and their parameters) that will be served.

System 100 conveniently provides a graphic user interface (GUI). Advertisement inventory screens should be a search screen (similar to reports) and result in a report according to the selected parameters. There should be three views for the ad inventory: (i) Campaign point of view - campaign estimation ("What if") - This is a report view and reach estimation for a campaign. An advertiser defines the targeting parameters for the campaign including the dates of the campaign and receives an estimation of amount of impressions that the advertiser should receive according to other campaigns in the system. (ii) Campaign point of view - campaign statistics - This report is used by the advertiser to understand what is the effectiveness and success of a currently running campaign. In this view the advertiser can see how much booking (i.e. inventory that was sold, but was not delivered to subscribers yet) he still has and an estimation on when the campaign will be finished. (iii) Impression Inventory for sales force - A system overview for the sales force to understand how much inventory is booked (i.e. inventory that was sold, but was not delivered to subscribers yet) and how much inventory is still remaining.

Using these reports the administrator of the system can drill down through the different components of the system and get an estimation of impressions. Using this tool the administrator can estimate how much inventory he can sell.

Module 500 can generate various types of reports. A first report can include, for example, targeting parameters for the campaign (what the advertisement campaign aims to achieve); Campaign owner; Campaign requested start /end date; Number of estimated impressions per advertisement campaign; Estimated days to finish campaign (if advertisers enters number of impression without end date.

Another report can include, for example, Dates for report, Campaign owner, Original booked impressions (i.e. the amount of impressions this advertiser booked before delivering a single impression), Predefined start / end date, Number of impression until during the report period, Number of impression delivered in this campaign until date that report was created, Booked impression (the remaining number of impression), Estimated number of days until all booked impression finishes, CTR from this campaign and Yield (delivered impression)/ (total responses).

Yet a further report can include Consumption Spread Percentage such as Video Concatenation during morning, noon, afternoon; Video Concatenation during evening, night; Video overlay during morning, noon, afternoon; Video Overlay during evening, night; Banner during morning, noon, afternoon; Text during morning, noon, afternoon; text during evening, night

Module 500 can define booked impressions and divide the booked impressions between campaigns of system 10.

Module 500 can receive an external estimation of impression limitations (of system 10), or of expected impressions to be provided to users that are to be services by system 10. This can be effective when starting to work-where there is not enough history. The estimation can be based upon mobile network provide traffic statistics. The mobile network operator (or service provider) can also provide an impression estimate. If the estimates also include timing estimates than the module 500 can better predict the expected impressions.

Initially, available impressions can be distributed between different campaigns in various manners. For example, the initial distribution process can allocate the same number of advertisements per campaign.

The following example illustrates an estimation of available impressions: a mobile service provider provides a download service integrated as system 10 FS, VOD / Live integrates as system 10 streaming, 1,000,000 Portal Pages are consumed per month, 20% will have banner advertisements that will be served from system 10, 300,000 downloads per month, 50% of the categories will have campaigns, 200,000 VOD / Live streams, all of them will have advertisements, Users are consuming content during all days of month, 60% of video and banners is consumed during day time and 40% is consumed during evening and night time, There is 1 campaign for video (mixed concatenation and overlay), There is 1 campaign for banners , The parameters should be set as

follows: Video Service Type $= \dfrac{300,000 \cdot 50\%}{30} + \dfrac{200,000 \cdot 100\%}{30} = 11,666 \ \mathtt{imp/day};$

Video Concatenation $= \dfrac{300,000 \cdot 50\%}{30} = 5,000 \ \mathtt{imp/day};$  Video verlay

$= \dfrac{200,000 \cdot 100\%}{30} = 6,666 \quad \mathtt{imp/day};$  Banners

$= \dfrac{1,000,000 \cdot 20\%}{30} = 6,666 \ \mathtt{imp/day}; \ \mathtt{Text} = 0$

Accordingly, the "*estimated*" inventory should be as follows (numbers are per day): For each campaign on each daytime period (morning, noon, afternoon) Video

$$\text{Concatenation} \quad = \quad \frac{5{,}000_{[imp/day]}}{1_{[campaigns]}} \cdot 60\%_{[day\ percentage]} \cdot \frac{1}{3_{[3\ day\ times]}} = 1{,}000\ \mathtt{imp/day};$$

For each campaign on each nighttime period (evening, night) Video Concatenation

$$= \quad \frac{5{,}000_{[imp/day]}}{1_{[campaigns]}} \cdot 40\%_{[day\ percentage]} \cdot \frac{1}{2_{[2\ night\ times]}} = 1{,}000\ \mathtt{imp/day};$$

For each campaign on each daytime period (morning, noon, afternoon)

$$\text{Video Overlay} \quad = \quad \frac{6{,}666_{[imp/day]}}{1_{[campaigns]}} \cdot 60\%_{[day\ percentage]} \cdot \frac{1}{3_{[3\ day\ times]}} = 1{,}335\ \mathtt{imp/day};$$

For each campaign on each nighttime period (evening, night)

$$\text{Video Overlay} \quad = \quad \frac{6{,}666_{[imp/day]}}{1_{[campaigns]}} \cdot 40\%_{[day\ percentage]} \cdot \frac{1}{2_{[2\ night\ times]}} = 1{,}335\ \mathtt{imp/day};$$

For each campaign on each daytime period (morning, noon, afternoon); Banners

$$= \quad \frac{6{,}666_{[imp/day]}}{1_{[campaigns]}} \cdot 60\%_{[day\ percentage]} \cdot \frac{1}{3_{[3\ day\ times]}} = 1{,}332\ \mathtt{imp/day};$$ For each campaign

on each nighttime period (evening, night) ; Banners

$$= \quad \frac{6{,}666_{[imp/day]}}{1_{[campaigns]}} \cdot 40\%_{[day\ percentage]} \cdot \frac{1}{2_{[2\ night\ times]}} = 1{,}332\ \mathtt{imp/day};$$

Once system 10 has enough history it can base its calculations on actual impressions provided in the past by system 10. The estimation can use various algorithms, such as but not limited to uses a linear regression of the impression related information.

Conveniently, an impression estimate is calculated for each basic element (content, web page) and the subtotals are accumulated according to the hierarchies. For example: If there are 6 content elements and 2 categories the impression estimation is calculated 6 times (for each of the contents). For estimation on a specific category (with 3 content elements) the sum of the estimations of those 3 content is calculated.

According to an embodiment of the invention system 10 can provide personalized advertisements to users that receive broadcast content. System 10 can retrieve content information relating to the broadcast content in various manners including but not limited to, intercepting broadcast content, intercepting metadata relating to the broadcast content, retrieving content information from a user device, from a broadcasting entity, from a control or verification entity, from a billing entity and the like. System 10 can retrieve content information from an electronic program guide.

Conveniently, each device (setup box, mobile, PDA etc) receiving broadcast transmission from different networks such as DVB-H, MediaFLO and other techniques can connect (if such connection exist and implemented) to a centralized service to verify access control, billing and any other service that required specific interaction and identification with the device. System 10 can add an up link from the user device to a centralized service (or use and existing channel/ connection). This communication between the user device and the centralize service controller is used by system10 to send personalized advertisements to the user device.

System 10 can monitor or connect to the centralized service and receive content information that indicates the content that each user device is receiving in each moment. System 10 can analyze this content information in order to decide which advertisement to send to the end user device. System 10 can also use this content information (and additionally or alternatively content information received directly from the broadcasting network to the user device) to decide when to send the advertisement to the user device. This content information can indicate when a commercial break starts and ends.

The advertisements can be sent over the link of the user device with the centralized service or any other personalized link to the user device.

According to an embodiment of the invention system 10 can alter code that are downloaded by a user devices. The altered code can include a plug-in code (or other advertisement related code) that once executed performs advertisement related operations such as retrieve an advertisement file, and the like.

System 10 is capable of adding applications advertising capabilities with no or minimal interference in the preparation of the application and in on-line manner. System 10 is also adapted to serve the changed applications once executed.

According to a first embodiment of the invention system 10 receives the code, transforms it and when an operating system of the user device sends a request to initiate the application the plug in code executes an advertisement related operation and once this operation ends the application can be executed. The transforming conveniently includes analyzing application code 4010.

Conveniently, the transforming includes: (i) receiving the application code (can be in a binary format); (ii) detecting the code parameters such as operating system, operating system integration parameters, (iii) determining advertisement operations to be executed by the plug in code; (iv) mapping and detecting interface points between the application and the operating system; (v) manipulating the application code in order to embed the plug in code in the application.

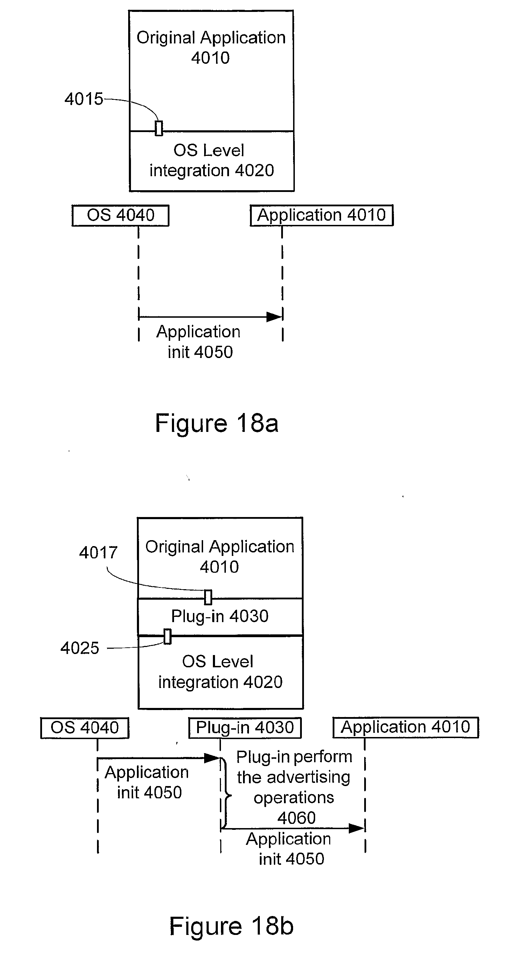

Figure 18a illustrates an application 4010 (termed "original application") that has an API 4015 to an operating system level integration code 4020. The latter code can interface with an operating system 4040. In runtime, operating system (OS) 4040 sends an application initialization command ("application init") 4050 to application 4010 in order to start the execution of application 4010.

After system 10 amends the code it includes an application plug in API 4017, a plug in OS level integration API 4025, as well as plug in code 4030.

In runtime, operating system (OS) 4040 sends an application initialization command ("application init") 4050 to plug in code 4030 in order to start the execution of application 4010. Plug in code 4030 intercepts this command, performs advertisement operation 4060, and send the application initialization command ("application init") 4050 to application 4010.

According to another embodiment of the invention the application is programmed in advance to include advertisement related commands (for example- by programming an advertisement code place holder). During the transformation this advertisement place holder is detected and a plug in replaces this place holder.

The following is an example of application code before the transformation and after the transformation.

The code before the transformation :

```
Class Application{
void advPlaceHolder1()
{ // this is just a place holder}
void advPlaceHolder2()
{ // this is just a place holder}
void Run(){
… Do something ..
advPlaceHolder1();
… Do something ..
advPlaceHolder1();
… Do something ..
}
```

```
}
The code after the transformation :
Import PlugIn;
Class Application{
void advPlaceHolder1()
{ // this is after replacing the place holder
PlugIn.PresentAdv();
}
void advPlaceHolder2()
{ // this is after replacing the place holder
PlugIn.PresentAdv();
}
void Run(){
… Do something ..
advPlaceHolder1();
… Do something ..
advPlaceHolder1();
… Do something ..
}
}
```

It is noted that advertisement runtime functionalities can be encapsulated in the plug-in code.

According to an embodiment of the invention system 10 can intercept (or otherwise retrieve) downloaded video files (such as video clips), and replace advertisements embedded in the video files to provide personalized advertisements.

The Metadata used for the replacement may include: (i) which advertisement is inserted in the video file. (ii) timing of the advertisement insertion operation within the video file; and (iii) advertisement insertion type and advertisement insertion timing for each advertisement to be inserted to the video file.

This metadata can be integrated with the video file in various methods, such as but not limited to: file format (including the metadata in headers of trailers) for example- ATOMs/BOXes in the mp4/3gp headers that can include metadata, encoded data into the bit stream (transmitting the metadata with the video file itself) including the information in the, water marking and Hash function (applying has function on the metadata to provide a hash value and transmitting the hash value).

File format includes providing file format headers that includes headers to signal file properties. These properties can hold additional extensible information.

Conveniently, the advertisement insertion includes: (i) Analyzing a retrieved video file to provide technical parameters such as codec, file format, bit rate and the like. (ii) Analyzing the retrieved video file in order to detect original advertisement parameters - whether original advertisements exist in the file, which advertisement they are, where they were added in the file (e.g. frame number, place in the screen, for how long etc'). (iii) determine whether to replace these advertisement, remove any advertisements from the video file, and if so-which new advertisements to include in the video file, (iv) acting according to the determination - maintaining original advertisement, deleting all advertisements, replacing original advertisements.

According to various embodiments of the invention system 10 can act as a mirror file system. It can intercept a request of a user to retrieve a content such as a request to receive a media file, process the media file such as to include within the requested file a personalized advertisement and then send the amended file (including the personalized advertisement) to the user.

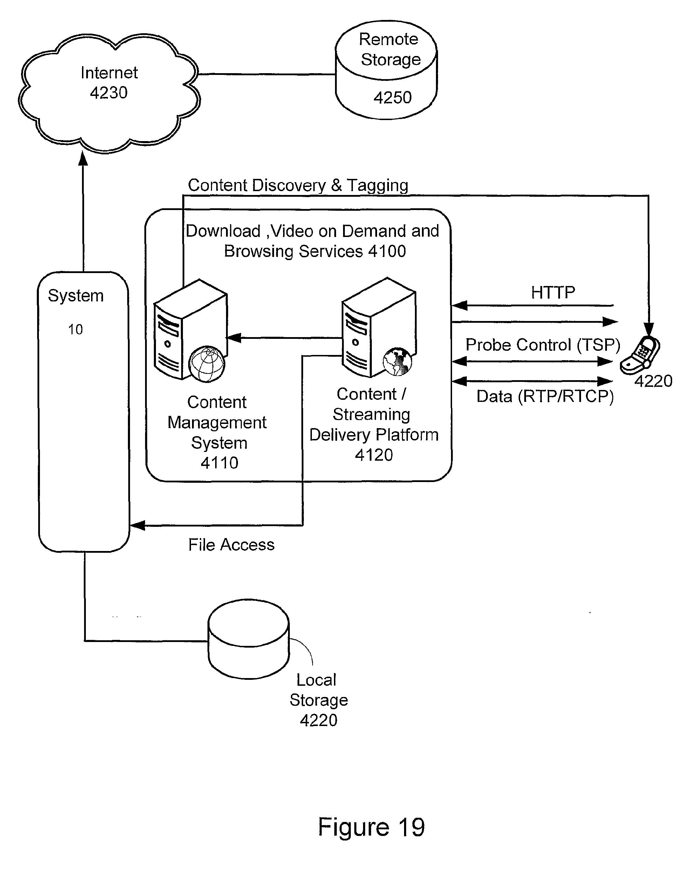

Figure 19 illustrates system 10, a mirrored file system (including remote storage unit 4250 and local content storage 4220) and a download, video on demand and browsing services 4100 according to an embodiment of the invention.

System 10 is logically connected between remote storage unit 4250 and local content storage 4220 and a download, video on demand and browsing services 4100. It does not intercept download requests from user device 4220 but rather intercepts file requests from download, video on demand and browsing services 4100.

There are various manners to determine that a relevant file was requested by user device 4220. For example, the file name can indicate that a media file is requested. Other control signals can also indicate that a media file is requested. In some embodiments, the file name or other metadata related to the file can include information indicative of the type of the media file, who is the user, and the like.

A user device 4220 can request to download a media file from download, video on demand and browsing services 4100. In response, download, video on demand and browsing services 4100 can request the file from a mirrored file system that includes remote storage unit 4250 and local content storage 4220. System 10 intercepts this request (denoted "file access"), retrieves the requested file from either one of remote storage unit 4250 and local content storage 4220, amends the media file to include a personalized advertisement and send the amended file via video on demand and browsing services 4100 to user device 4250.

Figure 19 is a signal diagram 5100 according to an embodiment of the invention. Signal diagram 5100 illustrates various signals that can be exchanges between a mirrored file system 5020, system 10 and a program (5030) that requests a file. Program 5030 can be executed by download, video on demand and browsing services 4100.

Diagram 5100 illustrates the following signals and stages: (i) program 5030 requests (5102) to receive a file named "file1.3gp_param1_param2", this file is a third generation MPEG 4 file that is characterized by parameter 1 (param1) and by parameter 2(pram_2) both included in the file name; (ii) system 10 receives the request, extracts (5104) parameter 1 and parameter 2 can send a request ("original file access file 1.3gp 5105) to mirrored file system 5020 to retrieve the file, or can retrieve the file from a local storage unit without sending such a request; (iii) assuming that the file was retrieved, system 10 sends the file to a file manipulative process (that can also be executed by system 10) to provide an amended file, the amended file can include a personalized advertisement, (iv) the file is changed (5108) and can be cached for later retrieval requests (5110); (v) the altered file is sent to program 5030 (5112) and the process ends.

If a successive request to receive the file is received (5114) system 10 can retrieve the cached altered file (5116), and send (5118) the file to program 5030. It is noted that is system 10 determines that another advertisement should be sent to program 5030 is can replace the advertisement.

According to various embodiments of the invention system 10 can act as a streaming proxy. It can intercept a request to receive content such as streaming media, alter the streaming media feed by inserting a personalized advertisement, replacing an existing advertisement in the media feed, and the like.

According to yet another embodiment of the invention system 10 can act as a streaming proxy and as a mirror file system.

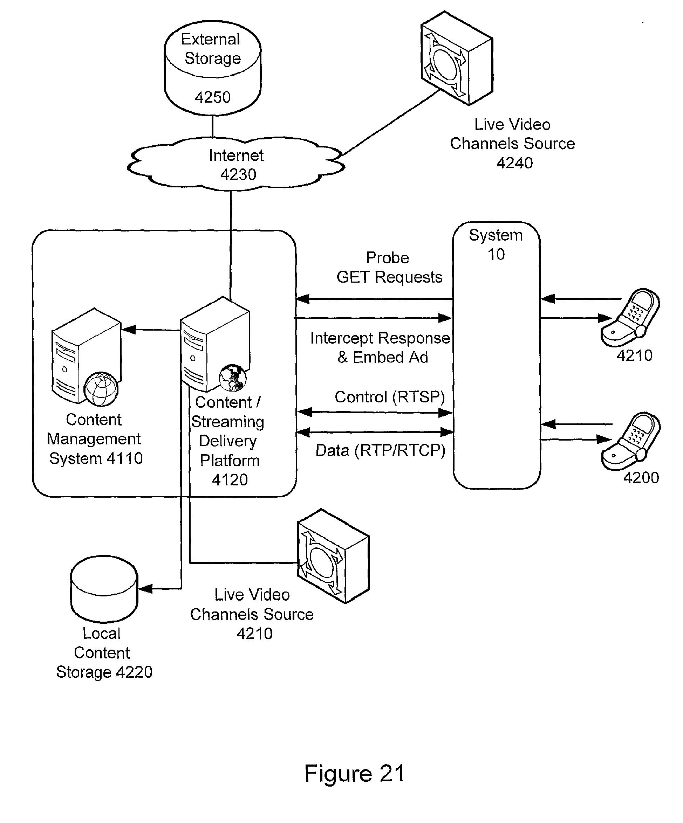

Figure 21 illustrates system 10 that can operate as a streaming proxy and as a http proxy. It is logically connected between user devices 4210 and 4200 and between various media feed providers (such as live video channels 4210 and 4240) as well as between these user devices and a file system that includes external remote storage 4250 and local storage 4220.

The file system and the media feed providers are connected to system 10 via download, video on demand and browsing services 4100. Remote storage 4250 and live content channels source 4240 are connected via network 4230 to download, video on demand and browsing services 4100. It is noted that the various entities of figure 21 can be connected to each other via one or more networks.

System 10 intercepts requests to receive files, request the files from download, video on demand and browsing services 4100, receive the files, amend the files and send amended files (including personalized advertisements) to either one of user devices 4210 and 4200.

System 10 also intercepts requests to receive streaming media (media feeds), receives the media feeds from either one of live video channel sources 4210 and 4240 (via download, video on demand and browsing services 4100) and can alter the feed by inserting an personalized advertisement, replacing an existing advertisement and the like.

System 10 can also receive a request to receive streaming media and decide not to alter the media feed (for example- if the user already received a predefined quota of advertisements during a predefined period). In this case the media feed transparently passes through system 10. In the latter case the media feed is not altered, neither decoded nor encoded. System 10 can pass the media feed in a transparent manner also when it experiences a problem.

System 10 acts as a proxy and as a feed amendment entity that is capable of determining which advertisement to insert to the media feed, insert it and send the amended media feed to the end user.

System 10 can amend metadata related to amended media feed to reflect the amendment. For example, control packets (such as RTCP) that relate to the amended media feed can be amended to describe the amended media feed. For example, if the number of video packets was increased due to the advertisement insertion process, the number of packets the end user reports will be higher than the number of packets that was send by download, video on demand and browsing services 4100. This number should thus be modified by system 10 so as not to confuse download, video on demand and browsing services 4100.

System 10 can embed an advertisement in various manners. For example, system 10 can conveniently delay the actual initiation of a streaming session or buffer the first data packets from the media feed and send a pre-roll advertisement to the client.

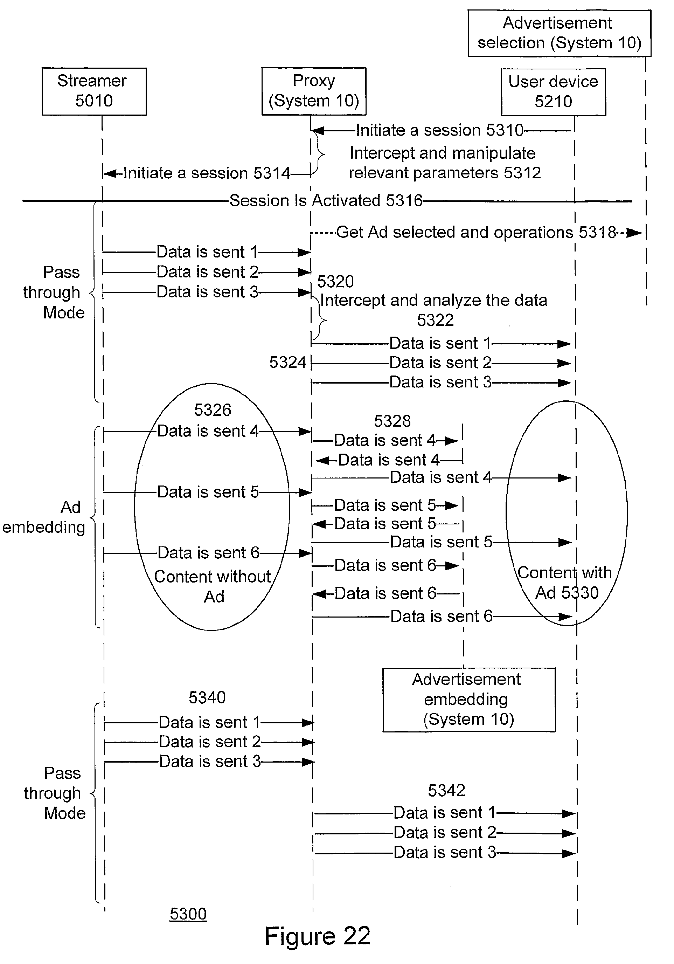

Figure 22 is a signal diagram 5300 according to an embodiment of the invention. Signal diagram 5300 illustrates various signals that can be exchanges between a streamer 5010, system 10 and a client device 5210 that requests a media feed according to an embodiment of the invention. Diagram 5300 illustrates the following signals and stages: (i) client device 5210 requests (5310) to receive a media feed (initiate a media streaming session); (ii) system 10 intercepts (5312) the request and manipulates relevant parameters, (iii) system 10 sends a request (5314) to receive the media feed from streamer 5010 - sends a request to initiate a media streaming session; (iv) streamer 500 starts the session (5316); (v) system 10 determines which advertisement to insert (5318) "get ad selected and operations 5318"; (v) system 10 receives (5320) a portion of a media feed (5320), intercepts and analyses it (5322) and passes it "as is" (5324) to user device 5210; (vi) system 10 receives (5326) another portion of the media feed (5326), and decides to embed a personalized advertisement (5328) that is sent (5330) to user device 5210; (vii) system 10 receives (5340) a further portion of a media feed, and passes it "as is" (5342) to user device 5210.

Conveniently, any combination of methods 1000, 2000 and 3000, can be provided. System 10 can execute any combination of stages of these methods.

Furthermore, the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or system.

Variations, modifications, and other implementations of what is described herein will occur to those of ordinary skill in the art without departing from the spirit and the scope of the invention as claimed.

Accordingly, the invention is to be defined not by the preceding illustrative description but instead by the spirit and scope of the following claims.

## Claims

**1.** A method for providing advertisements to a mobile user device, the method comprising: receiving a user request to receive content; selecting in real time a selected advertisement to sent to the user device by applying a user prediction model that predicts a user response to an advertisement that is sent to the mobile user device; and sending to the user device the selected advertisement in addition to the requested content.

**2.** A system that comprises: a communication module adapted to receive a user request to receive content; and a selection unit adapted to select in real time a selected advertisement to be sent to the user device by applying a user prediction model that predicts a user response to an advertisement that is sent to the mobile user device; wherein the selected advertisement is sent to the user device in addition to the requested content.

**3.** The system according to claim 2 comprising a user prediction model unit adapted to update a user prediction model based upon statistical analysis of large number of parameters that comprises user parameters, content parameters and advertisement parameters.

**4.** The system according to claim 2 wherein the selection unit that updates a user prediction model by applying machine learning algorithms.

**5.** The system according to claim 2 wherein the selection unit repetitively generates a new version of a user prediction model; compare the new version of the user prediction model to an older version of the user prediction model and determine whether to replace the older version of the user prediction model by the new version of the user prediction model based upon the comparison.

**6.** The system according to claim 5 wherein the user prediction model unit compares between a reliability and quality of each version.

**7.** The system according to claim 2 wherein the selection unit selects an advertisement in response to predefined selection rules.

**8.** A system for providing advertisements to a mobile user device, the system comprises: a storage unit adapted to store multiple images of content that is expected to be sent to a mobile user device; and a processor that is adapted to: analyze the multiple images to find an advertisement area; wherein the advertisement area is smaller than an image; and adjust an advertisement that is expected to be sent to the mobile user device such as to fit to the advertisement area.

**9.** The system according to claim 8 wherein the processor is adapted to send to the user device an adjusted advertisement to be displayed within the advertisement area.

**10.** The system according to claim 8 wherein the processor is adapted to classify pixels of each image out of the multiple images to low motion pixels and high motion pixels; wherein the advertisement area comprises a majority of low motion pixels.

**11.** The method according to claim 10 wherein the processor is adapted to detect a shot based upon a ratio between a number of low motion pixels and a number of high motion pixels within an image out of the multiple images.

**12.** The system according to claim 8 wherein the processor is adapted to classify pixels of each image out of the multiple images based upon direct current components of a partially decoded image.

**13.** The system according to claim 8 wherein the processor is adapted to find the advertisement area in response to a motion level of pixels and to a distance of pixels from edges of an image.

**14.** The system according to claim 8 wherein the processor is adapted to classify pixels of each image out of the multiple images in response to a dynamically calculated threshold.

**15.** The system according to claim 8 wherein the processor is adapted to analyze the multiple images in real time in response to a request of a user to receive content; and wherein the analysis is performed on a sequence of real time images that does not exceed a predefined length.

**16.** The system according to claim 8 wherein the processor is adapted to generate a histogram that represents a distribution of pixels and their motion.

**17.** The system according to claim 8 wherein the processor is adapted to update background model.

**18.** A method for advertisement insertion, the method comprising: detecting a commercial break by correlating between at least two detection events selected from a group consisting of: detection of an increase of an average audio level; detection of logo changes; detection of predefined images that are indicative of an advertisement break; detection of a shot change; and inserting an advertisement to be sent to a mobile end user device.

communication module
100

Filter 200

processor 400

selection unit 300

advertisement
campaign management
unit 500

Evaluator 510

Controller 520

storage unit 600

information acquisition
unit 700

10

Figure 1

| Advertising Service Management Layer | | | Network Layer |
|---|---|---|---|
| 510 Advertising Campaign Management | 520 Ad Content & User Management | 530 Ads settlements CDR & Reporting | 100 Communication |

**RT Analytics ,Personalization & Relevancy Layers**

160 Session Management

| 200 Filter | User prediction unit 340 | | 310 Predictive Analytics |
|---|---|---|---|
| | 330 Matching Rules | 320 Real-Time Scoring | |

110 Load Balancing

120 Redundancy

**RT Video & Rich-Media Handling Layer**

130 Scalability

| 410 Video Analysis | 420 Fusion rules | 430 Video Fusion |
|---|---|---|
| 412 Scene Change Detection | 422 Ads Adaptation | 432 RT Video Embedded |
| 414 Commercials Break Detection | 424 Ads Selection | 434 RT Video Overlay |
| 416 Silent Detection | 426 User Detection | 436 RT Video Appender |
| 418 Ad Space Detector | | |

140 High Availability

150 Extensibility

# Figure 2

| 1010<br>receiving a user request to receive content |
| --- |

| 1020<br>filtering advertisements to be sent to the user by applying multiple<br>filtering rules |
| --- |

| 1030<br>selecting a selected advertisement out of filtered advertisements |
| --- |

| 1040<br>performing media processing of the advertisement |
| --- |

| 1050<br>sending to the user the selected advertisement and the requested<br>content |
| --- |

| 1060<br>receiving a response (feedback) from a user to the advertisement |
| --- |

| 1080<br>managing advertisement campaign resources |
| --- |

1000

# Figure 3

```
┌─────────────────────────────────────────────────────────────────────┐
│                              1010                                     │
│               receiving a user request to receive content             │
└─────────────────────────────────────────────────────────────────────┘
                                   │
                                   ▼
┌─────────────────────────────────────────────────────────────────────┐
│                              2020                                     │
│    determining how to select a filtered advertisement to be sent      │
│                    to the user mobile device                          │
└─────────────────────────────────────────────────────────────────────┘
                                   │
                                   ▼
┌─────────────────────────────────────────────────────────────────────┐
│                              2030                                     │
│  selecting a selected advertisement to be sent to the user device by  │
│  applying a user prediction model that predicts a user response to an  │
│    advertisement that is sent to the mobile user device               │
└─────────────────────────────────────────────────────────────────────┘
                                   │
                                   ▼
┌─────────────────────────────────────────────────────────────────────┐
│                              1050                                     │
│  sending to the user device the selected advertisement in addition    │
│              to the requested content                                 │
└─────────────────────────────────────────────────────────────────────┘
                                   │
                                   ▼
┌─────────────────────────────────────────────────────────────────────┐
│                              1060                                     │
│      receiving a response (feedback) from a user to the advertisement  │
└─────────────────────────────────────────────────────────────────────┘
                                   │
                                   ▼
┌─────────────────────────────────────────────────────────────────────┐
│                              2050                                     │
│  updating a user prediction model based upon a response of the user   │
│  to the selected advertisement or a lack of a response to the         │
│                   selected advertisement                              │
└─────────────────────────────────────────────────────────────────────┘
                                   │
                                   ▼
┌─────────────────────────────────────────────────────────────────────┐
│                              2080                                     │
│  selecting a selected  advertisement to be sent to the user mobile    │
│        device in response to predetermined selection rules            │
└─────────────────────────────────────────────────────────────────────┘
```

2000

## Figure 4

**3010**
analyzing multiple images of a content that is expected to be sent to a mobile user device in order to find an advertisement area

**3012**
classifying pixels of each image out of the multiple images to low motion pixels and high motion pixels

**3014**
defining an advertisement area such as to include a majority of low motion pixels

**3016**
detecting a shot based upon a ratio between a number of low motion pixels and a number of high motion pixels within an image out of the multiple images

**3018**
updating a background model in response to a binzrized image obtained during stage 3012

**3020**
adjusting an advertisement that is expected to be sent to the mobile user device such as to fit to the advertisement area

**3030**
sending the adjusted advertisement to the user to be displayed within the advertisement area

3000

# Figure 5

Figure 6

| Campaigan Management | *Content & Subcribers* | Administration | | ⌂ ? X |
|---|---|---|---|---|

⊚ Content  ⌂ Subscribers

Content

Search By:

Name: [_____] Classification [_____ ▼]          Handset Type:  [_▼] [_▼]

Type: [_____ ▼] Duration: [_____ ▼] [_____]  Method: [_____ ▼] [_____]          [ Search ]

[ Import ] [ Add content ]

|  | Name | Classification | Duration (min) | Method |
|---|---|---|---|---|
| ☐ | Content1 | Lifestyle | 60000 | Download |
| ☐ | Content2 | News | 41795 | Streaming |
| ☐ | Content3 | Sport | 65100 | Live Streaming |

Content Metadata Management screen 521

# Figure 7

| Campaigan Management | *Content & Subcribers* | Administration | | ⌂ ? X |
|---|---|---|---|---|

⊚ Content  ⌂ Subscribers

Subcribers

Search By:

Mission [_____]          Status [_____ ▼]          Handset Type: [_▼] [_▼]

Name [_____]          Age [____] To [____]          Gender: [_____ ▼]          [ Search ]

[ Import ] [ Add Subcriber ]

|  |  | Mission | Name | Type | Marital Status | Gender | City | Handset Type |
|---|---|---|---|---|---|---|---|---|
| ☐ | ⌂ | 3 | C C | Private | Married | Female | | Nokia 6280 |
| ☐ | ⌂ | 2 | B B | Private | Single | Male | | Nokia 6280 |
| ☐ | ⌂ | 1 | A A | Business | Single | Male | | Nokia 6280 |

User Metadata Management Summary screen 523

# Figure 8

| ? | X |

| Campaigan Management | **Content & Subcribers** | Administration | |

◎ Content ⌧ Subscribers

Subscriber > Edit Subscriber

## Genaral

MSISDN [＿＿＿＿＿＿]         Subsciber Type [Private ▼]

First Name [＿＿＿＿＿＿]     Status [Active]

Last Name [＿＿＿＿＿＿]

☑ Ads Enabled

## Subscription information

Birth Date [＿＿＿＿＿＿] ▦

Gender ◉ Male ◯ Female

Material Status [＿＿＿ ▼]

Children [＿＿]

Address [＿＿＿＿＿]

[＿＿＿＿＿＿＿＿＿
＿＿＿＿＿＿＿＿＿
＿＿＿＿＿＿＿＿＿
＿＿＿＿＿＿＿＿＿]

Profession [＿＿＿＿＿]

Hobbies [＿＿＿＿＿
＿＿＿＿＿]

Figure 9a    User Metadata Management screen525

EP 2 109 077 A2

| *Campaigan Management* | Content & Subcribers | Administration | | ? X |
|---|---|---|---|---|

Campaigns      Campaign Owners      Reports

Campaigns

**Campaign List**

☐ Advertisers

├─☐ Cellcom

│ ├─☐ 29 Cents

│ │ ├─☐ 29 Cents car

│ │ │ └─☐ *29 Cents car*

│ │ ├─☐ 29 Cents pizza

│ │ │ └─☐ 29 Cents pizza

│ ├─☐ International calls

│ │ ├─☐ Shrinking Monuments

│ │ │ └─☐ Shrinking Monuments

│ │ ├─☐ International #1

│ │ │ └─☐ International

│ ├─☐ Little good thing

│ │ ├─☐ 2007 summer promo

│ │ │ └─☐ 2007 promo

│ ├─☐ Blockbuster

│ │ │ └─☐ Block buster benefit

**General**

Name:    29 Cents Car

File Path: /MediaLayers/Clips..    Upload

**Video Information**    Analyze

| File Format: | 3GP |
|---|---|
| Video Codec: | MP4 |
| Video Resolution: | H: 176  V: 144 |
| Video Codec: | MP4 |
| Frame rate (fps): | 10 |
| Bit rate (bps): | 82518 |
| File size (kb): | 210436 |
| Duration (sec): | 13653 |
| Number of Tracks: | 1 |
| Data Partitioned: | ☐ |
| RVLC | ☐ |

**Audio Information**

| Audio Codec: | AAC |
|---|---|
| Sample Rate: | 22050 |
| Bit rate (bps): | 23967 |
| Channel: | 1 |

Save    Reset

## Figure 9b

Video advertisement analysis screen527

EP 2 109 077 A2

Ad space selected just
before an I-frame

I-Frame

| 1 | 2 | 3 | *4* | 5 | 6 | 7 | 8 | Video frames      Content Clip
sequence

□□□□□□□□□□□□□□□□□□□□□□□ Audio frames
          3 4                                    sequence

I-Frame— | *A1* | A2 | A3 | A4 | A5 |    Advertisement  Clip
Audio frames sequence –
□□□□□□□□□□□□□□□ ◄──  Audio gain algorithm is
activated on these audio
frames

I-Frame                      I-Frame            Concatinated  Clip

| 1 | 2 | 3 | *A1* | A2 | A3 | A4 | A5 | *4* | 5 | 6 | 7 | 8 |

□□□□□□□□□ □□□□□□□□□□□□□□ □□□□□□□□□□□□□□
          3                              4
                                         ▲

◄─────────────────── Audio frames sequence –
maintain  audio/video
synchronization

Figure 10a

Ad space selected

I-Frame⌐  ▼  I-Frame⌐    Content Clip

| 1 | 2 | 3 | **4** | 5 | 6 | **7** | 8 | Video frames sequence

□□□□ □□□ □□□ □□ □ □□□ □□□ □□□ □□ Audio frames sequence
                    3 4

I-Frame ⌐

| **A1** | A2 | A3 | A4 | A5 | Advertisement Clip

Audio frames        □ □□ □ □□□ □□□ □□□ □□ ◄─
sequence – Audio
gain algorithm is
activated on these
audio frames

Video frames re-encoded till
the next I-Frame

Concatinated Clip    ⌐I-Frame    I-Frame⌐    ⌐‾‾‾‾⌐

| 1 | 2 | 3 | **4** | **A1** | A2 | A3 | A4 | A5 | **5** | 6 | 7 | 8 |

□ □□□ □□□ □□□ □□□ □□□ □□□ □□□ □□ □□□□ □□□ □□□ □□
         3                                    ▲4

I-Frame
Re-Encoded

Audio frames sequence –
maintain audio/video
synchronization

# Figure 10b

Figure 11

I-Frame

Content Clip

Video frames sequence

| 1 | 2 | 3 | **4** | 5 | 6 | 7 | 8 | 9 | 10 | 11 | 12 | 13 |

Audio frames sequence

Advertisement Video frames sequence .
Includes just the relevant slice from the
frame

A1  A2  A3  A4  A5

Advertisement Clip

Audio frames sequence – Audio gain
algorithm is activated on these audio
frames

I-Frame

I-Frame

I-Frame

Overlayed
Clip

| 1 | 2 | 3 | **4** | **5** | 6 | 7 | 8 | 9 | 10 | 11 | **12** | 13 |

A1    A2    A3    A4    A5

Re-encode the sequence from the
first frame of the advertisement

Re-encode the
sequence from
the last frame
of the
advertisement
till the next
I-frame

Audio frame can be replaced with
the advertisement audio

Figure 12

| AD | | Content |
|----|---|---------|

Time Window

# Figure 13

| Content | | AD | Content |
|---------|---|-----|---------|

Time Window

# Figure 14

Figure 15

Figure 16

| Original Application<br>4010 | System 10 | Original Application<br>4010 |
|---|---|---|
| | | Plug-in 4020 |
| | | OS Level<br>integration 4030 |

Advertisement
related code 4022

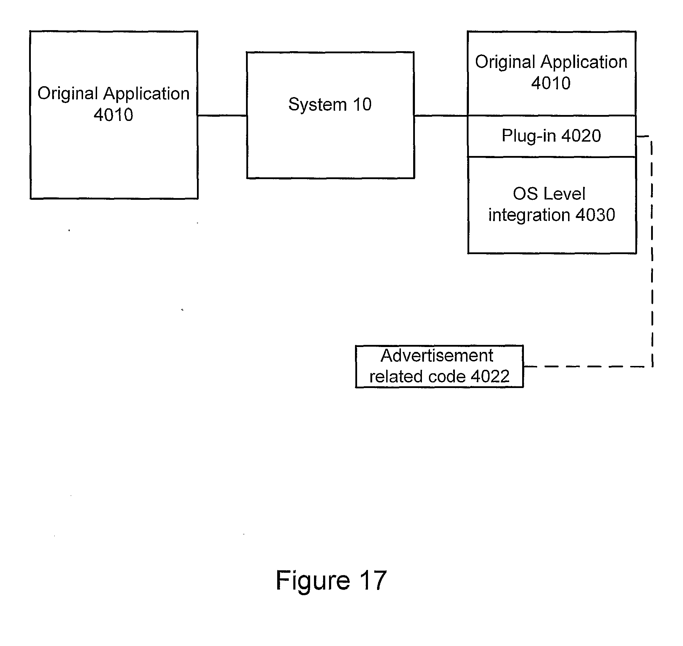

# Figure 17

Figure 18a

Figure 18b

Figure 19

| Mirrored FS 5020 | System 10 | Program 5030 |
|---|---|---|

File Access file1.3gp_param_1
param2
5102

Extract Param1, Param2 5104

Original File access File1.3gp 5105

Original File1.3 gp is sent for processing 5106

Changed file 1.3gp 5108

Changed file1.3gp is stored in cache for successive calls 5110

Return changed file 1.3gp 5112

Successive File Access of file1.3gp_param_1 param2 5114

Get Changed file1.3gp from cache 5116

Return changed file1.3 gp 5118

File Manipulative Process (System 10)

5100

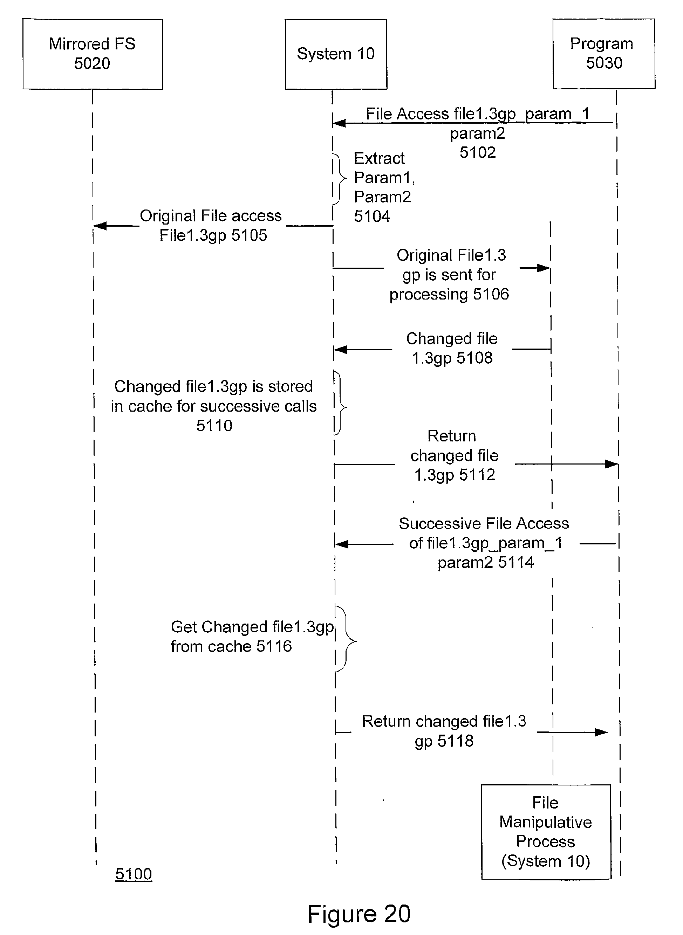

Figure 20

Figure 21

Figure 22